# EUROPEAN PATENT APPLICATION

(11) **EP 4 322 594 A1**
(43) Date of publication of application: **14.02.2024**
(21) Application number: 22795028.4
(22) Date of filing: 29.04.2022
(51) Int. Cl.: H04W 24/02

(54) **CELL RESELECTION METHOD, COMMUNICATIONS APPARATUS, AND COMPUTER-READABLE STORAGE MEDIUM**

(30) Priority: 30.04.2021 CN 202110485394
(71) Applicant: Huawei Technologies Co., Ltd., Longgang Shenzhen, Guangdong 518129 (CN)
(72) Inventor: SUN, Fei, Shenzhen, Guangdong 518129 (CN); LUO, Haiyan, Shenzhen, Guangdong 518129 (CN)
(74) Representative: Isarpatent
(86) International application number: PCT/CN2022/090381
(87) International publication number: WO 2022/228559

(57) **Abstract**

This disclosure provides a cell reselection method, a communication apparatus, and a computer-readable storage medium. In the method, a terminal device determines a target network slice; determines at least one candidate cell based on the target network slice, where a frequency corresponding to the candidate cell supports the target network slice; and selects a to-be-camped-on cell based on the at least one candidate cell. The method further includes: The terminal device receives system information from an access network device of a serving cell. The system information includes a network slice supported by a frequency corresponding to the serving cell and/or a priority of the network slice supported by the frequency corresponding to the serving cell; or the system information includes a network slice supported by a frequency corresponding to a neighboring cell and/or a priority of the network slice, and indication information indicating whether the serving cell supports the network slice supported by the frequency corresponding to the neighboring cell. The terminal device performs cell reselection through priority comparison. In this disclosure, during cell reselection, a slice is considered, to ensure that a reselected cell supports the target network slice.

## Description

### TECHNICAL FIELD

This disclosure relates to the communication field, and more specifically, to a cell reselection method, a communication apparatus, and a computer-readable storage medium.

### BACKGROUND

Mobility management is a mechanism in a cellular mobile communication system, and can assist the communication system in implementing load balancing, to improve user experience and overall system performance. One type of mobility management is cell selection or cell reselection, and is controlled by a terminal device. When performing cell reselection, the terminal device starts cell measurement based on a frequency priority, to complete a cell reselection process based on cell signal quality.

However, a current cell reselection solution is not complete, and cannot be applicable to a network slice scenario.

### SUMMARY

Example embodiments of this disclosure provide a cell reselection solution, to be applicable to a network slice scenario.

According to a first aspect, a cell reselection method is provided. The method includes: A terminal device determines a target network slice; the terminal device determines at least one candidate cell based on the target network slice, where a frequency corresponding to the candidate cell supports the target network slice; and the terminal device performs cell reselection based on the at least one candidate cell.

In this way, when performing cell reselection, the terminal device considers a network slice, and can specifically determine, based on the target network slice, the at least one candidate cell that supports the target network slice, to ensure that a cell obtained after cell reselection supports the target network slice. This is applicable to a network slice scenario. This cell reselection solution can meet a requirement of a service for a slice, and is more complete. In this solution, cell reselection efficiency is improved, a latency is reduced, and service experience of the terminal device is improved.

In some embodiments of the first aspect, the method further includes: The terminal device receives first system information from an access network device of a serving cell in which the terminal device is located, where the first system information includes a network slice supported by a frequency corresponding to the serving cell and/or a first priority of the network slice supported by the frequency corresponding to the serving cell.

In this way, the terminal device can obtain, by using the first system information, information about the slice supported by the frequency corresponding to the serving cell, so that the terminal device can consider the slice of the serving cell when performing cell reselection. In this way, this cell reselection solution is more complete.

In some embodiments of the first aspect, the first system information further includes a second priority of a network slice supported by a frequency corresponding to a neighboring cell. Optionally, the first system information may include a SIB 2.

In this way, the first system information may include both the information about the slice supported by the frequency corresponding to the serving cell and the second priority of the network slice supported by the frequency corresponding to the neighboring cell. The terminal device can determine, based on this, the network slice supported by the frequency corresponding to the serving cell and the network slice supported by the frequency corresponding to the neighboring cell. Therefore, the slices of the serving cell and the neighboring cell may be considered during cell reselection, so that this cell reselection solution is more complete, and additional signaling overheads are avoided.

In some embodiments of the first aspect, the method further includes: The terminal device receives second system information from an access network device of a serving cell in which the terminal device is located, where the second system information includes a network slice supported by a frequency corresponding to a neighboring cell and/or a second priority of the network slice supported by the frequency corresponding to the neighboring cell, the second system information further includes indication information corresponding to the network slice supported by the frequency corresponding to the neighboring cell, and the indication information indicates whether the serving cell supports the network slice supported by the frequency corresponding to the neighboring cell. In this way, the indication information that is in the system information and that corresponds to the network slice supported by the frequency corresponding to the neighboring cell may indicate whether the serving cell supports the network slice. This simplifies an indication manner and reduces signaling interaction overheads.

In some embodiments of the first aspect, the second system information further includes a first priority of a network slice supported by a frequency corresponding to the serving cell. Optionally, the second system information may include a SIB 4 and/or a SIB 5.

In this way, the second system information may include both information about the network slice supported by the frequency corresponding to the neighboring cell and information about the network slice supported by the frequency corresponding to the serving cell, so that the terminal device can directly obtain a parameter like a priority required for cell reselection, to avoid additional signaling overheads.

Optionally, the first system information and/or the second system information may each be a newly defined SIB.

The newly defined SIB is used as system information for cell reselection, so that the terminal device can more directly and quickly parse the parameter like the priority required for cell reselection, to shorten overall cell reselection time and improve cell reselection efficiency.

In some embodiments of the first aspect, the determining at least one candidate cell based on the target network slice includes: determining the at least one candidate cell in the neighboring cell based on the target network slice and the network slice supported by the frequency corresponding to the neighboring cell.

Optionally, if the network slice supported by the frequency corresponding to the neighboring cell includes the target network slice, the neighboring cell is a candidate cell.

In this way, the terminal device can determine the candidate cell based on the network slice supported by the frequency corresponding to the neighboring cell, so that all frequencies corresponding to candidate cells support the target network slice. In this way, it can be ensured that a reselected cell meets a requirement of a service for a slice.

In some embodiments of the first aspect, that the terminal device performs cell reselection based on the at least one candidate cell includes: The terminal device selects a to-be-camped-on cell based on the at least one candidate cell; the terminal device determines whether the to-be-camped-on cell meets a reselection condition; and the terminal device reselects the to-be-camped-on cell when the to-be-camped-on cell meets the reselection condition.

In some embodiments of the first aspect, that the terminal device selects a to-be-camped-on cell based on the at least one candidate cell includes: when the serving cell supports the target network slice, selecting the to-be-camped-on cell from the serving cell and the at least one candidate cell.

In this way, when the serving cell supports the target network slice, the to-be-camped-on cell for cell reselection may be selected from the serving cell and the candidate cell, to ensure that a selection range is valid and also ensure that a frequency corresponding to a reselected cell supports the target network slice.

In some embodiments of the first aspect, that the terminal device selects a to-be-camped-on cell based on the at least one candidate cell includes: when the serving cell does not support the target network slice, selecting the to-be-camped-on cell from the at least one candidate cell.

In this way, when the serving cell does not support the target network slice, the to-be-camped-on cell for cell reselection is selected only from the candidate cell, and the serving cell is not considered, to avoid a case in which a service requirement cannot be met because the serving cell selected after reselection does not meet the target network slice.

In some embodiments of the first aspect, that the terminal device selects a to-be-camped-on cell based on the at least one candidate cell includes: selecting the to-be-camped-on cell from a serving cell and a neighboring cell, where the neighboring cell includes the at least one candidate cell.

In some embodiments of the first aspect, the terminal device selects the to-be-camped-on cell from a serving cell and a neighboring cell based on at least one of the following: a first priority of the target network slice on a frequency corresponding to the serving cell, a second priority of the target network slice supported by the frequency corresponding to the candidate cell, or a second priority of the target network slice on a frequency corresponding to a non-candidate cell other than the at least one candidate cell in the neighboring cell.

In some embodiments of the first aspect, if the serving cell supports the target network slice, the first priority of the target network slice on the frequency corresponding to the serving cell is a first priority of a target network slice supported by the frequency corresponding to the cell.

In some embodiments of the first aspect, the method further includes: when the serving cell does not support the target network slice, setting, to a first preset value, the first priority of the target network slice on the frequency corresponding to the serving cell, where the first preset value is lower than the second priority of the target network slice supported by the frequency corresponding to the candidate cell.

In this way, even if the serving cell does not support the target network slice, the first priority of the target network slice on the frequency corresponding to the serving cell may also be defined by setting the first preset value, so that the serving cell is considered during cell reselection. Because a physical location of the terminal device is in the serving cell, and signal quality of the serving cell is usually higher than signal quality of the neighboring cell, the to-be-camped-on cell is to be selected from the serving cell and the candidate cell, so that both the signal quality and the network slice can be considered, to ensure that cell reselection reaches a better effect.

In some embodiments of the first aspect, the method further includes: for the non-candidate cell other than the at least one candidate cell in the neighboring cell, setting, to a second preset value, the second priority of the target network slice on the frequency corresponding to the non-candidate cell, where the second preset value is lower than the second priority of the target network slice supported by the frequency corresponding to the candidate cell.

In this way, the priority is set for the frequency corresponding to the non-candidate cell that does not support the target network slice, so that the to-be-camped-on cell for cell reselection can be selected from all neighboring cells. In this way, more comprehensive factors can be considered, so that a reselected cell not only meets a requirement of a slice but also meets another requirement like signal quality.

In some embodiments of the first aspect, the reselecting the to-be-camped-on cell includes: receiving third system information from an access network device of the to-be-camped-on cell, where the third system information includes indication information indicating whether the to-be-camped-on cell supports the target network slice; and reselecting the to-be-camped-on cell when the third system information indicates that the to-be-camped-on cell supports the target network slice.

In this way, a cell differentiation case may be considered. To be specific, different cells deployed on a frequency may support different network slices. In this way, whether the to-be-camped-on cell supports the target network slice can be learned based on the system information from the access network device of the to-be-camped-on cell, to avoid a case in which normal running of a service is affected because the terminal device camps on a cell that does not support the target network slice.

In some embodiments of the first aspect, the network slice has an identifier, and the identifier includes at least one of the following: S-NSSAI, a slice ID, a slice group ID, an access category, or an access identity.

In this way, the network slice may be identified in various different forms, to implement identifier diversification.

According to a second aspect, a cell reselection method is provided. The method includes: A terminal device obtains priority information of a network slice supported by a frequency corresponding to a neighboring cell; and the terminal device performs cell reselection based on the priority information of the network slice supported by the frequency corresponding to the neighboring cell.

In this way, when performing cell reselection, the terminal device can perform cell reselection based on the priority information of the network slice supported by the frequency corresponding to the neighboring cell, and fully consider different priorities of different network slices. This is applicable to a network slice scenario. In addition, it can be ensured that a reselected cell meets a service requirement of the terminal device, to reduce an access latency and improve service experience.

In some embodiments of the second aspect, that a terminal device obtains priority information of a network slice supported by a frequency corresponding to a neighboring cell includes: The terminal device receives system information from an access network device of a serving cell in which the terminal device is located, where the system information includes a second priority of the network slice supported by the frequency corresponding to the neighboring cell.

In some embodiments of the second aspect, the system information further includes indication information corresponding to the network slice supported by the frequency corresponding to the neighboring cell, and the indication information indicates whether the serving cell supports the network slice supported by the frequency corresponding to the neighboring cell.

In some embodiments of the second aspect, the system information further includes the network slice supported by the frequency corresponding to the neighboring cell.

In some embodiments of the second aspect, the system information further includes a first priority of a frequency corresponding to the serving cell. Optionally, in this embodiment, a network slice supported by the frequency corresponding to the serving cell has the first priority.

In some embodiments of the second aspect, the system information further includes the network slice supported by the frequency corresponding to the serving cell and/or the first priority of the network slice supported by the frequency corresponding to the serving cell.

In some embodiments of the second aspect, if the terminal device needs to initiate a service, and the service corresponds to a target network slice, that the terminal device performs cell reselection based on the priority information of the network slice supported by the frequency corresponding to the neighboring cell includes: The terminal device performs cell reselection based on a second priority of the target network slice supported by a frequency corresponding to a candidate cell in the neighboring cell, where the frequency corresponding to the candidate cell supports the target network slice.

In some embodiments of the second aspect, when the serving cell supports the target network slice, that the terminal device performs cell reselection based on a second priority of the target network slice supported by a frequency corresponding to a candidate cell in the neighboring cell includes: The terminal device selects a to-be-camped-on cell from the serving cell and the candidate cell based on the first priority of the target network slice supported by the frequency corresponding to the serving cell and the second priority of the target network slice supported by the frequency corresponding to the candidate cell; and the terminal device reselects the to-be-camped-on cell when the to-be-camped-on cell meets a reselection condition.

In some embodiments of the second aspect, when the serving cell does not support the target network slice, that the terminal device performs cell reselection based on a second priority of the target network slice supported by a frequency corresponding to a candidate cell in the neighboring cell includes: The terminal device selects a to-be-camped-on cell from the candidate cell based on the second priority of the target network slice supported by the frequency corresponding to the candidate cell; and the terminal device reselects the to-be-camped-on cell when the to-be-camped-on cell meets a reselection condition.

In some embodiments of the second aspect, that the terminal device performs cell reselection based on a second priority of the target network slice supported by a frequency corresponding to a candidate cell in the neighboring cell includes: The terminal device selects the to-be-camped-on cell from a serving cell and a neighboring cell based on at least one of the following: a first priority of the target network slice on a frequency corresponding to the serving cell, the second priority of the target network slice supported by the frequency corresponding to the candidate cell in the neighboring cell, or a second priority of the target network slice on a frequency corresponding to a non-candidate cell other than the candidate cell in the neighboring cell; and the terminal device reselects the to-be-camped-on cell when the to-be-camped-on cell meets a reselection condition.

In some embodiments of the second aspect, the method further includes: when the serving cell does not support the target network slice, setting, to a first preset value, the first priority of the target network slice on the frequency corresponding to the serving cell, where the first preset value is lower than the second priority of the target network slice supported by the frequency corresponding to the candidate cell.

In some embodiments of the second aspect, the method further includes: for the non-candidate cell other than the candidate cell in the neighboring cell, setting, to a second preset value, the second priority of the target network slice on the frequency corresponding to the non-candidate cell, where the second preset value is lower than the second priority of the target network slice supported by the frequency corresponding to the candidate cell.

In some embodiments of the second aspect, the reselecting the to-be-camped-on cell includes: receiving third system information from an access network device of the to-be-camped-on cell, where the third system information includes indication information indicating whether the to-be-camped-on cell supports the target network slice; and reselecting the to-be-camped-on cell when the third system information indicates that the to-be-camped-on cell supports the target network slice.

In some embodiments of the second aspect, the network slice has an identifier, and the identifier includes at least one of the following: S-NSSAI, a slice ID, a slice group ID, an access category, or an access identity.

According to a third aspect, an information transmission method is provided. The method includes: An access network device determines system information; and the access network device sends the system information, where the system information includes at least one of the following: a network slice supported by a frequency corresponding to a serving cell, a first priority of the network slice supported by the frequency corresponding to the serving cell, a network slice supported by a frequency corresponding to a neighboring cell, or a second priority of the network slice supported by the frequency corresponding to the neighboring cell.

Optionally, the system information may include first system information and second system information. The first system information includes the network slice supported by the frequency corresponding to the serving cell and/or the first priority of the frequency corresponding to the serving cell. The second system information includes the network slice supported by the frequency corresponding to the neighboring cell and/or the second priority of the network slice supported by the frequency corresponding to the neighboring cell.

In some embodiments of the third aspect, the system information includes the first priority of the network slice supported by the frequency corresponding to the serving cell, the network slice supported by the frequency corresponding to the neighboring cell, and the second priority of the network slice supported by the frequency corresponding to the neighboring cell.

In some embodiments of the third aspect, the system information includes the first priority of the frequency corresponding to the serving cell, the network slice supported by the frequency corresponding to the neighboring cell, and the second priority of the network slice supported by the frequency corresponding to the neighboring cell. Optionally, the system information further includes indication information corresponding to the network slice supported by the frequency corresponding to the neighboring cell, and the indication information indicates whether the serving cell supports the network slice supported by the frequency corresponding to the neighboring cell.

In some embodiments of the third aspect, the network slice has an identifier, and the identifier includes at least one of the following: S-NSSAI, a slice ID, a slice group ID, an access category, or an access identity.

According to a fourth aspect, a communication apparatus is provided. The apparatus includes: a first determining unit, configured to determine a target network slice; a second determining unit, configured to determine at least one candidate cell based on the target network slice, where a frequency corresponding to the candidate cell supports the target network slice; and a cell reselection unit, configured to perform cell reselection based on the at least one candidate cell.

In some embodiments of the fourth aspect, the apparatus further includes a receiving unit, configured to receive first system information from an access network device of a serving cell in which the communication apparatus is located, where the first system information includes a network slice supported by a frequency corresponding to the serving cell and/or a first priority of the network slice supported by the frequency corresponding to the serving cell.

In some embodiments of the fourth aspect, the first system information further includes a second priority of a network slice supported by a frequency corresponding to a neighboring cell.

In some embodiments of the fourth aspect, the apparatus further includes a receiving unit, configured to: receive second system information from an access network device of a serving cell in which the communication apparatus is located, where the second system information includes a network slice supported by a frequency corresponding to a neighboring cell and/or a second priority of the network slice supported by the frequency corresponding to the neighboring cell, the second system information further includes indication information corresponding to the network slice supported by the frequency corresponding to the neighboring cell, and the indication information indicates whether the serving cell supports the network slice supported by the frequency corresponding to the neighboring cell.

In some embodiments of the fourth aspect, the second system information further includes a first priority of a network slice supported by a frequency corresponding to the serving cell.

In some embodiments of the fourth aspect, the second determining unit is configured to determine the at least one candidate cell in the neighboring cell based on the target network slice and the network slice supported by the frequency corresponding to the neighboring cell.

In some embodiments of the fourth aspect, the cell reselection unit includes: a selection subunit, configured to select a to-be-camped-on cell based on the at least one candidate cell; a determining subunit, configured to determine whether the to-be-camped-on cell meets a reselection condition; and a reselection subunit, configured to reselect the to-be-camped-on cell when the to-be-camped-on cell meets the reselection condition.

In some embodiments of the fourth aspect, the selection subunit is configured to: when the serving cell supports the target network slice, select the to-be-camped-on cell from the serving cell and the at least one candidate cell.

In some embodiments of the fourth aspect, the selection subunit is configured to: when the serving cell does not support the target network slice, select the to-be-camped-on cell from the at least one candidate cell.

In some embodiments of the fourth aspect, the selection subunit is configured to select the to-be-camped-on cell from a serving cell and a neighboring cell based on at least one of the following: a first priority of the target network slice on a frequency corresponding to the serving cell, a second priority of the target network slice supported by the frequency corresponding to the candidate cell, or a second priority of the target network slice on a frequency corresponding to a non-candidate cell other than the at least one candidate cell in the neighboring cell.

In some embodiments of the fourth aspect, the apparatus further includes a setting unit, configured to: when the serving cell does not support the target network slice, set, to a first preset value, the first priority of the target network slice on the frequency corresponding to the serving cell, where the first preset value is lower than the second priority of the target network slice supported by the frequency corresponding to the candidate cell.

In some embodiments of the fourth aspect, the apparatus further includes a setting unit, configured to: for the non-candidate cell other than the at least one candidate cell in the neighboring cell, set, to a second preset value, the second priority of the target network slice on the frequency corresponding to the non-candidate cell, where the second preset value is lower than the second priority of the target network slice supported by the frequency corresponding to the candidate cell.

In some embodiments of the fourth aspect, the reselection subunit is configured to: receive third system information from an access network device of the to-be-camped-on cell, where the third system information includes indication information indicating whether the to-be-camped-on cell supports the target network slice; and reselect the to-be-camped-on cell when the third system information indicates that the to-be-camped-on cell supports the target network slice.

In some embodiments of the fourth aspect, the network slice has an identifier, and the identifier includes at least one of the following: S-NSSAI, a slice ID, a slice group ID, an access category, or an access identity.

According to a fifth aspect, a communication apparatus is provided. The apparatus includes: an obtaining unit, configured to obtain priority information of a network slice supported by a frequency corresponding to a neighboring cell; and a cell reselection unit, configured to perform cell reselection based on the priority information of the network slice supported by the frequency corresponding to the neighboring cell.

In some embodiments of the fifth aspect, the obtaining unit is configured to receive system information from an access network device of a serving cell in which the communication apparatus is located, where the system information includes a second priority of the network slice supported by the frequency corresponding to the neighboring cell.

In some embodiments of the fifth aspect, the system information includes the second priority of the network slice supported by the frequency corresponding to the neighboring cell, and indication information corresponding to the network slice supported by the frequency corresponding to the neighboring cell, where the indication information indicates whether the serving cell supports the network slice supported by the frequency corresponding to the neighboring cell.

In some embodiments of the fifth aspect, the system information includes the network slice supported by the frequency corresponding to the neighboring cell, the second priority of the network slice supported by the frequency corresponding to the neighboring cell, and indication information corresponding to the network slice supported by the frequency corresponding to the neighboring cell, where the indication information indicates whether the serving cell supports the network slice supported by the frequency corresponding to the neighboring cell. The system information further includes a first priority of a frequency corresponding to the serving cell. Optionally, in this embodiment, a network slice supported by the frequency corresponding to the serving cell has the first priority.

In some embodiments of the fifth aspect, the system information further includes the network slice supported by the frequency corresponding to the serving cell and/or the first priority of the network slice supported by the frequency corresponding to the serving cell.

In some embodiments of the fifth aspect, if the communication apparatus needs to initiate a service, and the service corresponds to a target network slice, the cell reselection unit is configured to perform cell reselection based on a second priority of the target network slice supported by a frequency corresponding to a candidate cell in the neighboring cell, where the frequency corresponding to the candidate cell supports the target network slice.

In some embodiments of the fifth aspect, when the serving cell supports the target network slice, the cell reselection unit is configured to: select a to-be-camped-on cell from the serving cell and the candidate cell based on the first priority of the target network slice supported by the frequency corresponding to the serving cell and the second priority of the target network slice supported by the frequency corresponding to the candidate cell; and reselect the to-be-camped-on cell when the to-be-camped-on cell meets a reselection condition.

In some embodiments of the fifth aspect, when the serving cell does not support the target network slice, the cell reselection unit is configured to: select a to-be-camped-on cell from the candidate cell based on the second priority of the target network slice supported by the frequency corresponding to the candidate cell; and reselect the to-be-camped-on cell when the to-be-camped-on cell meets a reselection condition.

In some embodiments of the fifth aspect, the cell reselection unit is configured to: select the to-be-camped-on cell from a serving cell and the neighboring cell based on at least one of the following: a first priority of the target network slice on a frequency corresponding to the serving cell, the second priority of the target network slice supported by the frequency corresponding to the candidate cell in the neighboring cell, or a second priority of the target network slice on a frequency corresponding to a non-candidate cell other than the candidate cell in the neighboring cell; and reselect the to-be-camped-on cell when the to-be-camped-on cell meets a reselection condition.

In some embodiments of the fifth aspect, the apparatus further includes a setting unit, configured to: when the serving cell does not support the target network slice, set, to a first preset value, the first priority of the target network slice on the frequency corresponding to the serving cell, where the first preset value is lower than the second priority of the target network slice supported by the frequency corresponding to the candidate cell.

In some embodiments of the fifth aspect, the apparatus further includes a setting unit, configured to: for the non-candidate cell other than the candidate cell in the neighboring cell, set, to a second preset value, the second priority of the target network slice on the frequency corresponding to the non-candidate cell, where the second preset value is lower than the second priority of the target network slice supported by the frequency corresponding to the candidate cell.

In some embodiments of the fifth aspect, the cell reselection unit is configured to: receive third system information from an access network device of the to-be-camped-on cell, where the third system information includes indication information indicating whether the to-be-camped-on cell supports the target network slice; and reselect the to-be-camped-on cell when the third system information indicates that the to-be-camped-on cell supports the target network slice.

In some embodiments of the fifth aspect, the network slice has an identifier, and the identifier includes at least one of the following: S-NSSAI, a slice ID, a slice group ID, an access category, or an access identity.

According to a sixth aspect, a communication apparatus is provided. The apparatus includes: a determining unit, configured to determine system information; and a sending unit, configured to send the system information, where the system information includes at least one of the following: a network slice supported by a frequency corresponding to a serving cell, a first priority of the network slice supported by the frequency corresponding to the serving cell, a network slice supported by a frequency corresponding to a neighboring cell, or a second priority of the network slice supported by the frequency corresponding to the neighboring cell.

Optionally, the system information may include first system information and second system information. The first system information includes the network slice supported by the frequency corresponding to the serving cell and/or the first priority of the frequency corresponding to the serving cell. The second system information includes the network slice supported by the frequency corresponding to the neighboring cell and/or the second priority of the network slice supported by the frequency corresponding to the neighboring cell.

In some embodiments of the sixth aspect, the system information includes the first priority of the network slice supported by the frequency corresponding to the serving cell, the network slice supported by the frequency corresponding to the neighboring cell, and the second priority of the network slice supported by the frequency corresponding to the neighboring cell.

In some embodiments of the sixth aspect, the system information includes the first priority of the frequency corresponding to the serving cell, the network slice supported by the frequency corresponding to the neighboring cell, and the second priority of the network slice supported by the frequency corresponding to the neighboring cell. Optionally, the system information further includes indication information corresponding to the network slice supported by the frequency corresponding to the neighboring cell, and the indication information indicates whether the serving cell supports the network slice supported by the frequency corresponding to the neighboring cell.

In some embodiments of the sixth aspect, the network slice has an identifier, and the identifier includes at least one of the following: S-NSSAI, a slice ID, a slice group ID, an access category, or an access identity.

According to a seventh aspect, a communication apparatus is provided. The apparatus includes a processor and a memory. The memory stores instructions executed by the processor. When the instructions are executed by the processor, the apparatus is enabled to implement the following steps: determining a target network slice; determining at least one candidate cell based on the target network slice, where a frequency corresponding to the candidate cell supports the target network slice; and performing cell reselection based on the at least one candidate cell.

In some embodiments of the seventh aspect, the apparatus further includes a transceiver, configured to receive first system information from an access network device of a serving cell in which the communication apparatus is located, where the system information includes a network slice supported by a frequency corresponding to the serving cell and/or a first priority of the network slice supported by the frequency corresponding to the serving cell.

In some embodiments of the seventh aspect, the first system information further includes a second priority of a network slice supported by a frequency corresponding to a neighboring cell.

In some embodiments of the seventh aspect, the apparatus further includes a transceiver, configured to: receive second system information from an access network device of a serving cell in which the communication apparatus is located, where the system information includes a network slice supported by a frequency corresponding to a neighboring cell and/or a second priority of the network slice supported by the frequency corresponding to the neighboring cell, the second system information further includes indication information corresponding to the network slice supported by the frequency corresponding to the neighboring cell, and the indication information indicates whether the serving cell supports the network slice supported by the frequency corresponding to the neighboring cell.

In some embodiments of the seventh aspect, the second system information further includes a first priority of a network slice supported by a frequency corresponding to the serving cell.

In some embodiments of the seventh aspect, the processor executes the instructions, to enable the apparatus to implement the following step: determining the at least one candidate cell in the neighboring cell based on the target network slice and the network slice supported by the frequency corresponding to the neighboring cell.

In some embodiments of the seventh aspect, the processor executes the instructions, to enable the apparatus to implement the following steps: selecting a to-be-camped-on cell based on the at least one candidate cell; determining whether the to-be-camped-on cell meets a reselection condition; and reselecting the to-be-camped-on cell when the to-be-camped-on cell meets the reselection condition.

In some embodiments of the seventh aspect, the processor executes the instructions, to enable the apparatus to implement the following step: when the serving cell supports the target network slice, selecting the to-be-camped-on cell from the serving cell and the at least one candidate cell.

In some embodiments of the seventh aspect, the processor executes the instructions, to enable the apparatus to implement the following step: when the serving cell does not support the target network slice, selecting the to-be-camped-on cell from the at least one candidate cell.

In some embodiments of the seventh aspect, the processor executes the instructions, to enable the apparatus to implement the following step: selecting the to-be-camped-on cell from a serving cell and a neighboring cell based on at least one of the following: a first priority of the target network slice on a frequency corresponding to the serving cell, a second priority of the target network slice supported by the frequency corresponding to the candidate cell, or a second priority of the target network slice on a frequency corresponding to a non-candidate cell other than the at least one candidate cell in the neighboring cell.

In some embodiments of the seventh aspect, the processor executes the instructions, to enable the apparatus to implement the following step: when the serving cell does not support the target network slice, setting, to a first preset value, the first priority of the target network slice on the frequency corresponding to the serving cell, where the first preset value is lower than the second priority of the target network slice supported by the frequency corresponding to the candidate cell.

In some embodiments of the seventh aspect, the processor executes the instructions, to enable the apparatus to implement the following step: for the non-candidate cell other than the at least one candidate cell in the neighboring cell, setting, to a second preset value, the second priority of the target network slice on the frequency corresponding to the non-candidate cell, where the second preset value is lower than the second priority of the target network slice supported by the frequency corresponding to the candidate cell.

In some embodiments of the seventh aspect, the processor executes the instructions, to enable the apparatus to implement the following steps: receiving third system information from an access network device of the to-be-camped-on cell, where the third system information includes indication information indicating whether the to-be-camped-on cell supports the target network slice; and reselecting the to-be-camped-on cell when the third system information indicates that the to-be-camped-on cell supports the target network slice.

In some embodiments of the seventh aspect, the network slice has an identifier, and the identifier includes at least one of the following: S-NSSAI, a slice ID, a slice group ID, an access category, or an access identity.

According to an eighth aspect, a communication apparatus is provided, and includes a processor and a memory. The memory stores instructions executed by the processor. When the instructions are executed by the processor, the apparatus is enabled to implement the following steps: obtaining priority information of a network slice supported by a frequency corresponding to a neighboring cell; and performing cell reselection based on the priority information of the network slice supported by the frequency corresponding to the neighboring cell.

In some embodiments of the eighth aspect, the apparatus further includes a transceiver, configured to receive system information from an access network device of a serving cell in which the communication apparatus is located, where the system information includes a second priority of the network slice supported by the frequency corresponding to the neighboring cell.

In some embodiments of the eighth aspect, the system information includes the second priority of the network slice supported by the frequency corresponding to the neighboring cell, and indication information corresponding to the network slice supported by the frequency corresponding to the neighboring cell, where the indication information indicates whether the serving cell supports the network slice supported by the frequency corresponding to the neighboring cell.

In some embodiments of the eighth aspect, the system information includes the network slice supported by the frequency corresponding to the neighboring cell, the second priority of the network slice supported by the frequency corresponding to the neighboring cell, and indication information corresponding to the network slice supported by the frequency corresponding to the neighboring cell, where the indication information indicates whether the serving cell supports the network slice supported by the frequency corresponding to the neighboring cell. The system information further includes a first priority of a frequency corresponding to the serving cell. Optionally, in this embodiment, a network slice supported by the frequency corresponding to the serving cell has the first priority.

In some embodiments of the eighth aspect, the system information further includes the network slice supported by the frequency corresponding to the serving cell and/or the first priority of the network slice supported by the frequency corresponding to the serving cell.

In some embodiments of the eighth aspect, the communication apparatus needs to initiate a service, and the service corresponds to a target network slice. The processor executes the instructions, to enable the apparatus to implement the following step: performing cell reselection based on a second priority of the target network slice supported by a frequency corresponding to a candidate cell in the neighboring cell, where the frequency corresponding to the candidate cell supports the target network slice.

In some embodiments of the eighth aspect, when the serving cell supports the target network slice, the processor executes the instructions, to enable the apparatus to implement the following steps: selecting a to-be-camped-on cell from the serving cell and the candidate cell based on the first priority of the target network slice supported by the frequency corresponding to the serving cell and the second priority of the target network slice supported by the frequency corresponding to the candidate cell; and reselecting the to-be-camped-on cell when the to-be-camped-on cell meets a reselection condition.

In some embodiments of the eighth aspect, when the serving cell does not support the target network slice, the processor executes the instructions, to enable the apparatus to implement the following steps: selecting a to-be-camped-on cell from the candidate cell based on the second priority of the target network slice supported by the frequency corresponding to the candidate cell; and reselecting the to-be-camped-on cell when the to-be-camped-on cell meets a reselection condition.

In some embodiments of the eighth aspect, the processor executes the instructions, to enable the apparatus to implement the following steps: selecting the to-be-camped-on cell from a serving cell and the neighboring cell based on at least one of the following: a first priority of the target network slice on a frequency corresponding to the serving cell, the second priority of the target network slice supported by the frequency corresponding to the candidate cell in the neighboring cell, or a second priority of the target network slice on a frequency corresponding to a non-candidate cell other than the candidate cell in the neighboring cell; and performing cell reselection.

In some embodiments of the eighth aspect, the processor executes the instructions, to enable the apparatus to implement the following step: when the serving cell does not support the target network slice, setting, to a first preset value, the first priority of the target network slice on the frequency corresponding to the serving cell, where the first preset value is lower than the second priority of the target network slice supported by the frequency corresponding to the candidate cell.

In some embodiments of the eighth aspect, the processor executes the instructions, to enable the apparatus to implement the following step: for the non-candidate cell other than the candidate cell in the neighboring cell, setting, to a second preset value, the second priority of the target network slice on the frequency corresponding to the non-candidate cell, where the second preset value is lower than the second priority of the target network slice supported by the frequency corresponding to the candidate cell.

In some embodiments of the eighth aspect, the processor executes the instructions, to enable the apparatus to implement the following steps: receiving third system information from an access network device of the to-be-camped-on cell, where the third system information includes indication information indicating whether the to-be-camped-on cell supports the target network slice; and reselecting the to-be-camped-on cell when the third system information indicates that the to-be-camped-on cell supports the target network slice.

In some embodiments of the eighth aspect, the network slice has an identifier, and the identifier includes at least one of the following: S-NSSAI, a slice ID, a slice group ID, an access category, or an access identity.

According to a ninth aspect, a communication apparatus is provided, and includes a transceiver, a processor, and a memory. The memory stores instructions executed by the processor. When the instructions are executed by the processor, the apparatus is enabled to implement the following steps: determining system information; and sending the system information by using the transceiver, where the system information includes at least one of the following: a network slice supported by a frequency corresponding to a serving cell, a first priority of the network slice supported by the frequency corresponding to the serving cell, a network slice supported by a frequency corresponding to a neighboring cell, or a second priority of the network slice supported by the frequency corresponding to the neighboring cell.

Optionally, the system information may include first system information and second system information. The first system information includes the network slice supported by the frequency corresponding to the serving cell and/or the first priority of the frequency corresponding to the serving cell. The second system information includes the network slice supported by the frequency corresponding to the neighboring cell and/or the second priority of the network slice supported by the frequency corresponding to the neighboring cell.

In some embodiments of the ninth aspect, the system information includes the first priority of the network slice supported by the frequency corresponding to the serving cell, the network slice supported by the frequency corresponding to the neighboring cell, and the second priority of the network slice supported by the frequency corresponding to the neighboring cell.

In some embodiments of the ninth aspect, the system information includes the first priority of the frequency corresponding to the serving cell, the network slice supported by the frequency corresponding to the neighboring cell, and the second priority of the network slice supported by the frequency corresponding to the neighboring cell. Optionally, the system information further includes indication information corresponding to the network slice supported by the frequency corresponding to the neighboring cell, and the indication information indicates whether the serving cell supports the network slice supported by the frequency corresponding to the neighboring cell.

In some embodiments of the ninth aspect, the network slice has an identifier, and the identifier includes at least one of the following: S-NSSAI, a slice ID, a slice group ID, an access category, or an access identity.

According to a tenth aspect, a terminal device is provided. The terminal device can implement the method according to any one of the first aspect, the second aspect, or the implementations thereof.

The terminal device may include the communication apparatus according to any one of the fourth aspect, the fifth aspect, the seventh aspect, the eighth aspect, or the implementations thereof.

According to an eleventh aspect, an access network device is provided. The access network device can implement the method according to any one of the third aspect or the implementations thereof.

The access network device may include the apparatus according to any one of the sixth aspect, the ninth aspect, or the implementations thereof.

According to a twelfth aspect, a computer-readable storage medium is provided. The computer-readable storage medium stores a computer program, and when the computer program is executed by a processor, an operation of the method according to any one of the first aspect, the second aspect, the third aspect, or the embodiments thereof is implemented.

According to a thirteenth aspect, a chip or a chip system is provided. The chip or the chip system includes a processing circuit, configured to perform an operation of the method according to any one of the first aspect, the second aspect, the third aspect, or the embodiments thereof.

According to a fourteenth aspect, a computer program or a computer program product is provided. The computer program or the computer program product is tangibly stored in a computer-readable medium and includes computer-executable instructions. When the computer-executable instructions are executed, a device is enabled to implement an operation of the method according to any one of the first aspect, the second aspect, the third aspect, or the embodiments thereof.

It should be understood that, without contradicting each other, various aspects and/or some embodiments of the aspects described above may be combined with each other, or may be replaced completely or partially. For example, some embodiments of an aspect may be combined with some other embodiments of the aspect to obtain some new embodiments of the aspect. For example, some embodiments of an aspect may be combined with some embodiments of another aspect to obtain some new embodiments of the aspect. For example, some embodiments of an aspect may be used as some embodiments of another aspect.

### BRIEF DESCRIPTION OF DRAWINGS

Features, advantages, and other aspects of implementations of this disclosure will become more apparent with reference to the accompanying drawings and with reference to the following detailed descriptions. Several implementations of this disclosure are shown herein by way of example rather than limitation. In the accompanying drawings:
FIG. 1 is a schematic diagram of a communication system 100 including a network slice;
FIG. 2 is a schematic diagram of a communication system 200 according to an embodiment of this disclosure;
FIG. 3 is a schematic flowchart of a cell reselection method 300 according to an embodiment of this disclosure;
FIG. 4 is another schematic flowchart of a cell reselection method 400 according to an embodiment of this disclosure;
FIG. 5 is a schematic diagram of another communication system 500 according to an embodiment of this disclosure;
FIG. 6 is a schematic diagram of another communication system 600 according to an embodiment of this disclosure;
FIG. 7 is a schematic flowchart of a process 700 of selecting a to-be-camped-on cell according to an embodiment of this disclosure;
FIG. 8 is a schematic diagram of another communication system 800 according to an embodiment of this disclosure;
FIG. 9 is another schematic flowchart of a process 900 of selecting a to-be-camped-on cell according to an embodiment of this disclosure;
FIG. 10 is a schematic flowchart of a cell reselection method 1000 according to an embodiment of this disclosure;
FIG. 11 is a schematic interaction diagram of a cell reselection method 1100 according to an embodiment of this disclosure;
FIG. 12 is a schematic diagram of a slice deployment case 1200 according to an embodiment of this disclosure;
FIG. 13 is another schematic flowchart of a cell reselection method 1300 according to an embodiment of this disclosure;
FIG. 14 is another schematic interaction diagram of a cell reselection method 1400 according to an embodiment of this disclosure;
FIG. 15 is a schematic flowchart of an information transmission method 1500 according to an embodiment of this disclosure;
FIG. 16 is a schematic block diagram of a communication apparatus 1600 according to an embodiment of this disclosure;
FIG. 17 is a schematic block diagram of a communication apparatus 1700 according to an embodiment of this disclosure;
FIG. 18 is a schematic block diagram of a communication apparatus 1800 according to an embodiment of this disclosure; and
FIG. 19 is a simplified block diagram of an example apparatus 1900 according to an embodiment of this disclosure.

### DESCRIPTION OF EMBODIMENTS

The following describes embodiments of this disclosure in more detail with reference to the accompanying drawings. Although some embodiments of this disclosure are illustrated in the accompanying drawings, it should be understood that this disclosure may be implemented in various forms and should not be construed as limited to embodiments described herein. On the contrary, providing embodiments is to understand this disclosure more thoroughly and completely. It should be understood that the accompanying drawings and embodiments of this disclosure are merely used as examples, but are not intended to limit the protection scope of this disclosure.

In the descriptions of embodiments of this disclosure, the term "include" and similar terms thereof should be understood as open inclusion, that is, "include but not limited to". The term "based on" should be understood as "at least partially based on". The term "an embodiment" or "this embodiment" should be understood as "at least one embodiment". The terms "first", "second", and the like may refer to different or same objects.

Embodiments of this disclosure may be implemented according to any proper communication protocol, including but not limited to 3rd generation (3rd Generation, 3G), 4th generation (4G), and 5th generation (5G) cellular communication protocols, a wireless local area network communication protocol like the institute of electrical and electronics engineers (Institute of Electrical and Electronics Engineers, IEEE) 802.11, and/or any other protocol currently known or developed in the future.

Technical solutions in embodiments of this disclosure are applied to complying with any proper communication system, for example, a general packet radio service (General Packet Radio Service, GPRS), a global system for mobile communications (Global System for Mobile Communications, GSM), an enhanced data rate for GSM evolution (Enhanced Data rate for GSM Evolution, EDGE) system, a universal mobile telecommunications system (Universal Mobile Telecommunications System, UMTS), a long term evolution (Long Term Evolution, LTE) system, a wideband code division multiple access (Wideband Code Division Multiple Access, WCDMA) system, a code division multiple access 2000 (Code Division Multiple Access, CDMA 2000) system, a time division-synchronization code division multiple access (Time Division-Synchronization Code Division Multiple Access, TD-SCDMA) system, a frequency division duplex (Frequency Division Duplex, FDD) system, a time division duplex (Time Division Duplex, TDD) system, or a 5th generation (5G) system, a new radio (New Radio, NR).

For purposes of description, embodiments of this disclosure are described below in the context of a 3rd generation partnership project (3GPP) communication system in 5G. However, it should be understood that, embodiments of this disclosure are not limited to be applied to the 3GPP communication system in 5G, but may be applied to any communication system having a similar problem, for example, a wireless local area network (WLAN), a wired communication system, or another communication system developed in the future.

The term "terminal device" used in this disclosure refers to any terminal device that can perform wired or wireless communication with a network device or between terminal devices. The terminal device may be sometimes referred to as user equipment (User Equipment, UE). The terminal device may be any type of mobile terminal, fixed terminal, or portable terminal. In an example, the terminal device may include a mobile phone, a station, a unit, a device, a mobile terminal (Mobile Terminal, MT), a subscription station, a portable subscription station, an internet node, a communicator, a desktop computer, a laptop computer, a notebook computer, a tablet computer, a personal communication system device, a personal navigation device, a personal digital assistant (Personal Digital Assistant, PDA), a positioning device, a radio broadcast receiver, an e-book device, a game device, an internet of things (Internet of Things, IoT) device, a vehicle-mounted device, a flight vehicle, a virtual reality (Virtual Reality, VR) device, an augmented reality (Augmented Reality, AR) device, a wearable device, a terminal device in a 5G network, any terminal device in an evolved public land mobile network (Public Land Mobile Network, PLMN), another device that can be used for communication, or any combination thereof. This is not limited in embodiments of this disclosure.

The term "access network device" used in this disclosure is an entity or a node that can be configured to communicate with the terminal device. The access network device may be an apparatus that is deployed in a radio access network and that provides a wireless communication function for the mobile terminal. For example, the access network device may be a radio access network (Radio Access Network, RAN) network device. The access network device may include various types of base stations. For example, the access network device may include various forms of macro base stations, micro base stations, pico base stations, femto base stations, relay stations, access points, remote radio units (Remote Radio Units, RRUs), radio heads (Radio Heads, RHs), and remote radio heads (Remote Radio Heads, RRHs). In systems using different radio access technologies, the access network device may have different names. For example, the access network device is referred to as an evolved NodeB (evolved NodeB, eNB or eNodeB) in a long term evolution (Long Term Evolution, LTE) system network, is referred to as a NodeB (NodeB, NB) in a 3G network, and may be referred to as a gNodeB (gNB) or an NR NodeB (NR NB) in the 5G network. In some scenarios, the access network device may include a central unit (Central Unit, CU) and/or a distributed unit (Distributed Unit, DU). The CU and DU may be deployed in different places. For example, the DU is remotely deployed in a high-traffic area, and the CU is deployed in a central equipment room. Alternatively, the CU and the DU may be deployed in a same equipment room. The CU and the DU may alternatively be different components in a same rack. For ease of description, in subsequent embodiments of this disclosure, the foregoing apparatuses that provide the wireless communication function for the mobile terminal are collectively referred to as an access network device. This is not specifically limited in embodiments of this disclosure any more.

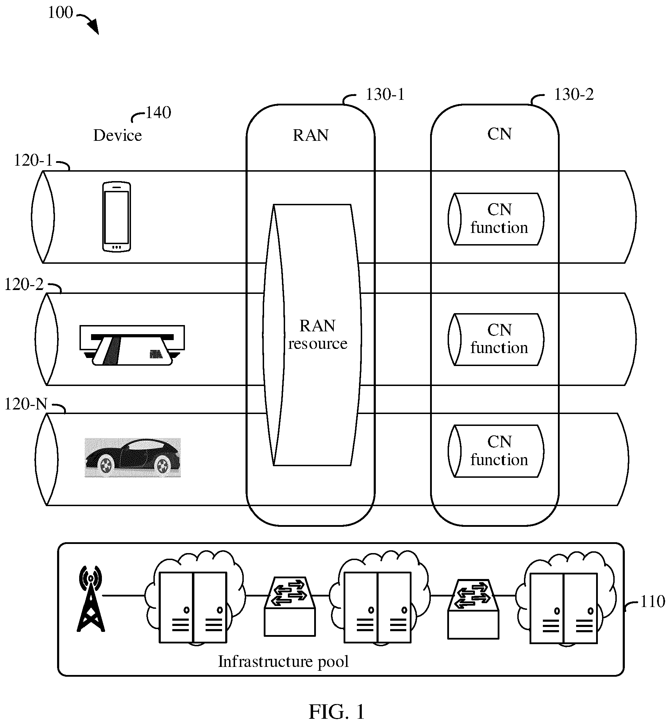

The term "network slice (Network Slice)" used in this disclosure is a virtual logical network, and may provide specific network performance. For a further understanding of the network slice, refer to FIG. 1.

FIG. 1 is a schematic diagram of a communication system 100 including a network slice. As shown in the figure, a plurality of network slices 120-1, 120-2, ..., and 120-N (which are collectively referred to as or separately referred to as a network slice 120 in this disclosure for ease of discussion) may be virtualized on an infrastructure pool 110, where N is an integer greater than 1. It should be understood that, infrastructures and a quantity of network slices that are shown in FIG. 1 are merely examples, and the network slice may also be referred to as a "slice" for short.

The infrastructure pool 110 may include various physical or virtual network devices required to support a network service. For example, the network device may be at least one of the following: an access network device, a server, a switch, or a core network device. As shown in FIG. 1, a radio access network (Radio Access Network, RAN) 130-1 may provide a RAN resource, and a core network (Core Network, CN) 130-2 may provide one or more CN functions. A mobile network operator (Mobile Network Operator, MNO) may regard customers as different types of tenants. Different types of tenants may have different service requirements, and the service requirements are determined based on the service level agreement (Service Level Agreement, SLA), subscription, and the like. RAN resources and the like can be allocated to different network slices 120 based on different service requirements or tenant requirements. Therefore, different network slices 120 can provide different network capabilities and network characteristics, to meet different service requirements of a device 140.

A type of the network slice 120 is usually related to a service type to be supported. For example, the service type may include enhanced mobile broadband (Enhanced Mobile Broadband, eMBB), ultra-reliable low latency communication (Ultra-Reliable Low Latency Communication, URLLC), massive internet of things (massive Internet of Things, mIoT), and vehicle-to-everything (Vehicle-to-Everything, V2X).

The eMBB may provide a wider data bandwidth. For example, a humidity latency improvement may be made in both 5G (NR) and 4G (LTE). The URLLC may meet requirements of more bandwidths and ultra-reliable and low latency, and may reduce an end-to-end latency, especially for some applications that are sensitive to the latency and require wide coverage. The mIoT can meet communication requirements between a large quantity of devices with low power consumption in a wide area range. The V2X enables communication between vehicles, between a vehicle and the access network device, between a vehicle and another terminal device, and the like. For example, the V2X may be used in a future intelligent transportation system.

For example, as shown in FIG. 1, the network slice 120-1 may be an eMMB slice, the network slice 120-2 may be an mIoT slice, and the network slice 120-N may be a V2X slice.

Different network slices 120 may be logical networks that have different characteristics and are isolated from each other, to provide dedicated services for users. A 5G network slice is used as an example. The 5G network slice is a network architecture that can multiplex virtualized and independent logical networks on a same physical network infrastructure. Each network slice may be an isolated end-to-end (end-to-end) network, and is intended to meet various requirements requested by a specific application program.

Different network slices may be identified and differentiated by using single network slice selection assistance information (Single Network Slice Selection Assistance Information, S-NSSAI). The S-NSSAI may include a slice/service type (Slice/Service Type, SST), to indicate a feature of a network slice and a service type served by the network slice. As a supplement to the SST, the S-NSSAI may further include slice differentiation information (Slice Differentiator, SD), to further differentiate between a plurality of network slice instances that meet a same SST. The SD is optional.

Conventionally, when performing cell reselection, a terminal device may determine, based on priorities of frequencies of a serving cell and a neighboring cell, how to start measurement. However, this solution is not complete enough, and cannot meet a requirement of the communication system having the network slice.

Embodiments of this disclosure provide a cell reselection solution. The following describes embodiments of this disclosure in detail with reference to the accompanying drawings.

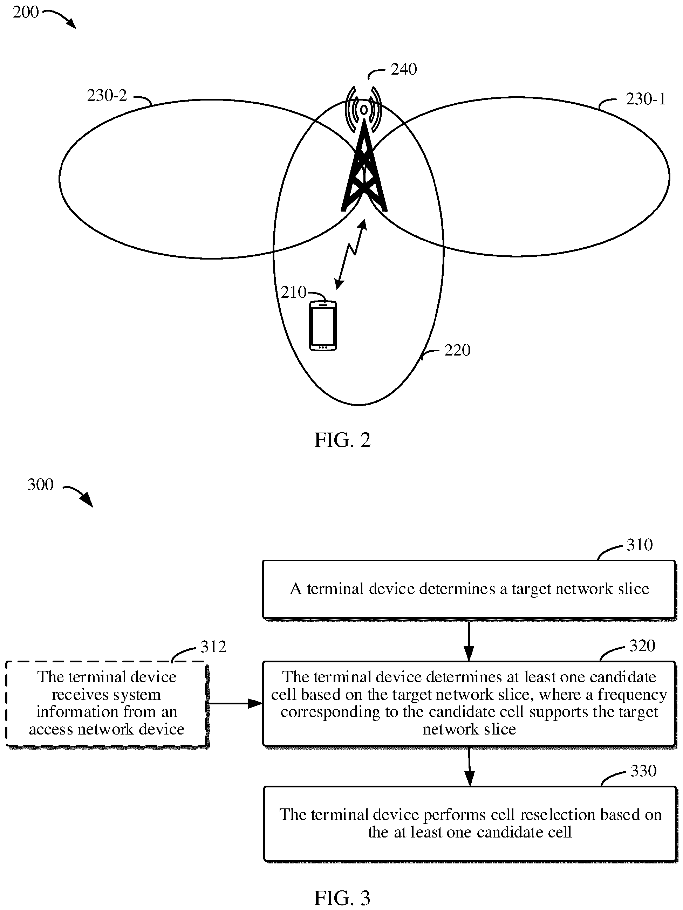

FIG. 2 is a schematic diagram of a communication system 200 according to an embodiment of this disclosure. The system 200 in FIG. 2 includes a terminal device 210 and an access network device 240.

As shown in FIG. 2, the terminal device 210 is located in a serving cell 220. The serving cell 220 has a neighboring cell 230-1 and a neighboring cell 230-2. The access network device 240 may be an access network device of the serving cell 220. For example, the access network device 240 may be a public mobile communication base station (for example, a gNB).

For ease of discussion, in the following, the neighboring cell 230-1 and the neighboring cell 230-2 may be collectively referred to as a neighboring cell 230. It should be understood that, a quantity of neighboring cells 230 shown in FIG. 2 is merely an example.

Different cells may work on a same frequency or different frequencies. In the example in FIG. 2, it is assumed that a frequency (namely, a serving frequency) of the serving cell 220 is f1, a frequency of the neighboring cell 230-1 is f2, and a frequency of the neighboring cell 230-2 is f3. It should be understood that, the frequency in embodiments of this disclosure may also be referred to as a frequency, a carrier frequency (Carrier Frequency), or the like. This is not limited in this disclosure. For ease of description, the following uses the frequency as an example for description. It should be understood that, the frequency in embodiments of this disclosure may be a value in a corresponding frequency range, for example, a central value. For brevity of description, the following uses the frequency as an example for description. However, it may be understood that, the frequency in embodiments of this disclosure may alternatively be replaced with the corresponding frequency range.

It may be understood that, a cell works on a corresponding frequency. For example, the frequency of the serving cell 220 is f1, in other words, the serving cell 220 works on the frequency f1. It may be understood that, a plurality of different cells may be deployed on a frequency. For example, the frequency f2 may be equal to the frequency f3. In other words, both the neighboring cell 230-1 and the neighboring cell 230-2 are deployed on the frequency f2. In addition, it should be further understood that, the serving cell and the neighboring cell are relative concepts, and may change as the terminal device 210 moves. This is not limited in this disclosure.

It should be understood that, a quantity of devices and connections thereof that are shown in FIG. 2 are provided for purposes of description and are not intended to constitute any limitation. The system 200 may include any proper quantity of other devices applicable to implementing embodiments of this disclosure.

In addition, it should be noted that, FIG. 2 is merely an example, and the three cells shown in FIG. 2 are not limited to the foregoing scenario. For example, the neighboring cell 230 may be any one of an intra-system intra-frequency cell, an intra-system inter-frequency cell, an inter-system intra-frequency cell, or an inter-system inter-frequency cell of the serving cell 220. This is not limited in this disclosure.

In embodiments of this disclosure, the terms "cell", "frequency", and "network slice" are used. A frequency corresponding to a cell may be referred to as a cell frequency for shortA cell has a corresponding frequency, or the frequency is referred to as a cell frequency for short. On the contrary, one or more cells may be deployed on a frequency. The frequency may support one or more network slices, and the cell may support one or more network slices.

In embodiments of this disclosure, the term "priority" may also be referred to as a "reselection priority (Reselection Priority)" or a "cell reselection priority (cell Reselection Priority)". For brevity, the term is referred to as a priority for short in embodiments of this disclosure. In some examples, the priority may be sent by the access network device by using system information or a radio resource control release (Radio Resource Control Release, RRC Release) message. In some other examples, for example, priorities that are of different frequencies and that correspond to different systems may still be used when reselection is performed in a different system. Optionally, a value range of the priority may be 0 to 7, and a larger value indicates a higher priority. For example, the priority may be indicated in another manner. This is not limited in this disclosure. Optionally, a sub-priority may further be included, and is also referred to as a cell reselection sub-priority (Cell Reselection Sub-Priority). In an example, a value of the sub-priority may be 0.2, 0.4, 0.6, 0.8, or the like. It should be noted that, embodiments of this disclosure describe the priority. Embodiments of the sub-priority may be obtained in a similar way, and are not described in this disclosure.

FIG. 3 is a schematic flowchart of a cell reselection method 300 according to an embodiment of this disclosure. The method 300 may be performed by a terminal device 210. The method 300 shown in FIG. 3 may include steps 310 to 330.

310: The terminal device determines a target network slice.

In this embodiment of this disclosure, the target network slice may be an intended network slice of the terminal device, or is referred to as an intended slice (Intended Slice) for short.

In some embodiments, the terminal device in an idle (idle) state or an inactive (inactive) state needs to perform cell reselection in a moving process. In this case, the terminal device may determine the target network slice.

In an implementation, if the terminal device has a mobile original (Mobile Original, MO) service, in other words, if the terminal device needs to initiate a service, the terminal device 210 may determine, as the target network slice, a slice corresponding to the service. In this implementation, the slice corresponding to the service to be initiated by the terminal device is an intended slice. For example, the service may also be referred to as slice communication.

For example, with reference to the communication system 100 in FIG. 1, assuming that the service to be initiated by the terminal device is a live service, it may be determined that the corresponding target network slice is an eMBB slice. Assuming that the service to be initiated by the terminal device is a self-driving service, it may be determined that the corresponding target network slice is a URLLC slice. Assuming that the service to be initiated by the terminal device is a smart home control service, it may be determined that the corresponding target network slice is an mIoT slice. Assuming that the service to be initiated by the terminal device is a self-driving service, it may be determined that the corresponding target network slice is a V2X slice. It may be understood that these are merely examples. In these examples, a correspondence between the service and the slice does not constitute a limitation, and another slice or the like may be further included.

In another implementation, if the terminal device does not have a service to be initiated, the terminal device may determine at least one of allowed (allowed) network slices as the target network slice.

For example, an identifier of the target network slice may be sent to an access stratum (Access Stratum, AS) by using a non-access stratum (Non-Access Stratum, NAS) of the terminal device, to determine the target network slice.

Different network slices may have different identifiers. The identifier of the network slice may be at least one of the following: (1) S-NSSAI, (2) a slice identifier (Slice ID), (3) a slice group identifier (Slice group ID), (4) an access category (Access Category, AC), or (5) an access identity (Access Identity, AI).

For ease of description below, it is assumed that the target network slice is represented as S2 in this embodiment of this disclosure.

320: The terminal device determines at least one candidate cell based on the target network slice, where a frequency corresponding to the candidate cell supports the target network slice.

For example, that the frequency supports the target network slice may include that the frequency may be used to access the target network slice, in other words, the target network slice may be accessed by using the frequency. In some examples, the terminal device may determine a frequency that can be used to access the target network slice, and may further use, as the at least one candidate cell, a cell deployed on the frequency.

The terminal device may determine the at least one candidate cell based on a network slice supported by a frequency corresponding to a neighboring cell and the target network slice determined in 310.

In some embodiments of this disclosure, the terminal device may obtain the network slice supported by the frequency corresponding to the neighboring cell, use, as a candidate frequency, a frequency that supports the target network slice, and further determine, as the at least one candidate cell, a cell deployed on the candidate frequency.

The neighboring cell may be an intra-system inter-frequency cell or an inter-system cell. Correspondingly, the frequency corresponding to the neighboring cell may be a different frequency from that of a camped-on cell, and the neighboring cell and the camped-on cell may be in a same system, or may be in different systems. For example, assuming that a system in which the terminal device is located is an NR system, the frequency corresponding to the neighboring cell may be a different frequency in the NR system or an inter-radio access technology (Radio Access Technology, RAT) (inter-RAT) frequency.

Optionally, before 320, the method may further include step 312: The terminal device receives the system information from an access network device.

In an example, the system information may include the network slice supported by the frequency corresponding to the neighboring cell. In other words, the network slice supported by the frequency corresponding to the neighboring cell may be provided for the terminal device by using the system information, so that the terminal device can directly obtain the network slice supported by the frequency corresponding to the neighboring cell. In another example, the system information may include a second priority of the network slice supported by the frequency corresponding to the neighboring cell. In this example, the system information may implicitly indicate the network slice supported by the frequency corresponding to the neighboring cell, so that the terminal device can indirectly obtain the network slice supported by the frequency corresponding to the neighboring cell.

For example, in 320, the terminal device may determine the at least one candidate cell based on the system information.

It may be understood that, although 312 shown in FIG. 3 is performed before 320, in embodiments of this disclosure, 312 may be performed simultaneously or not simultaneously with 310, for example, may be performed before 310. This is not limited in this disclosure.

The system information sent by the access network device may include a master information block (Master Information Block, MIB) and a system information message (System Information Message). The system information message may further include a plurality of types of system information blocks (System Information Blocks, SIBs), such as a SIB 1, a SIB 2, a SIB 3, a SIB 4, and a SIB 5. It may be understood that, the system information may alternatively be another type of SIB defined subsequently. This is not limited in this disclosure.

Optionally, in 320, the terminal device may determine the at least one candidate cell based on the system information.

For example, it is assumed that the frequency corresponding to the neighboring cell is f2, and network slices supported by the frequency f2 include a first network slice S 1 and a second network slice S2. In this case, in this embodiment, the system information may indicate, by using "f2: {S1, S2}" that the network slices supported by the frequency f2 are S1 and S2.

It may be understood that, there may be one or more neighboring cells. For example, the system information may include a network slice supported by a frequency corresponding to the one or more neighboring cells. FIG. 2 is used as an example. The terminal device may obtain a network slice supported by a frequency corresponding to a neighboring cell 230-1 and a network slice supported by a frequency corresponding to a neighboring cell 232-2. It is assumed that "f2: {S1, S2}" indicates that network slices supported by the frequency f2 corresponding to the neighboring cell 230-1 are S1 and S2, and "f3: {Sl, S2, S3}" indicates that network slices supported by the frequency f3 corresponding to the neighboring cell 230-2 are S1, S2, and S3. It should be noted that, this is merely an example, and should not be construed as a limitation on embodiments of this disclosure for ease of understanding of the solutions.

For example, if the system information indicates that a frequency supports the target network slice, all neighboring cells deployed on the frequency may be used as candidate cells, that is, all neighboring cells deployed on the frequency are candidate cells. For example, if a first frequency supports the target network slice, all cells deployed on the first frequency are candidate cells. If a second frequency does not support the target network slice, none of cells deployed on the second frequency is a candidate cell.

When the target network slice is S2, FIG. 2 is used as an example. The network slice supported by the frequency f2 corresponding to the neighboring cell 230-1 includes S2, and the network slice supported by the frequency f3 corresponding to the neighboring cell 230-2 also includes S2. In this case, the frequency f2 and the frequency f3 are candidate frequencies, and correspondingly, the neighboring cell 230-1 and the neighboring cell 230-2 may be determined as candidate cells.

In this embodiment of this disclosure, a frequency that supports the target network slice may be determined as a candidate frequency, or a frequency that does not support the target network slice may be determined as a non-candidate frequency. Correspondingly, all cells deployed on the non-candidate frequency are non-candidate cells.

330: The terminal device performs cell reselection based on the at least one candidate cell.

Specifically, the terminal device may select a to-be-camped-on cell based on the at least one candidate cell, and then perform cell reselection based on the to-be-camped-on cell.

For example, the terminal device may select the to-be-camped-on cell based on the at least one candidate cell, determine whether the to-be-camped-on cell meets a reselection condition, and reselect the to-be-camped-on cell when the to-be-camped-on cell meets the reselection condition.

In an implementation, that the terminal device selects a to-be-camped-on cell based on the at least one candidate cell includes: The terminal device selects the to-be-camped-on cell from a serving cell and the at least one candidate cell.

In another implementation, that the terminal device selects a to-be-camped-on cell based on the at least one candidate cell includes: The terminal device selects the to-be-camped-on cell from the at least one candidate cell.

In still another implementation, that the terminal device selects a to-be-camped-on cell based on the at least one candidate cell includes: The terminal device selects the to-be-camped-on cell from a serving cell and the neighboring cell, where the neighboring cell includes the at least one candidate cell. In some examples, the neighboring cell may further include a non-candidate cell other than the at least one candidate cell.

Specifically, the terminal device may select the to-be-camped-on cell based on priority information. The priority information is to be described in detail in the following with reference to the system information.

The system information may be sent by the access network device to the terminal device, and the access network device is an access network device of a serving cell in which the terminal device is located. For example, refer to 312. The terminal device receives the system information from the access network device.

In some embodiments, the system information includes a network slice supported by a frequency corresponding to the serving cell. In this way, the terminal device may determine, based on the system information, whether the serving cell supports the target network slice. Optionally, the system information may be a SIB 2 or a newly defined SIB.

For example, it may be assumed that the target network slice is S2. In an example, the system information may indicate, by using "{S1, S2}", that the network slices supported by the serving cell 220 are S1 and S2. In this case, the terminal device may determine that the serving cell supports the target network slice S2. In another example, the system information may indicate, by using "{ S 1 }", that the network slice supported by the serving cell 220 is S1. In this case, the terminal device may determine that the serving cell does not support the target network slice S2.

In some other embodiments, the system information includes a first priority of a frequency corresponding to the serving cell and a network slice supported by the frequency corresponding to the serving cell. In this way, the terminal device may determine, based on the system information, whether the serving cell supports the target network slice, and when determining that the serving cell supports the target network slice, the terminal device may further determine a first priority of the target network slice supported by the frequency corresponding to the serving cell. Optionally, the system information may be a SIB 2 or a newly defined SIB. Alternatively, optionally, the system information may include first system information and second system information. The first system information includes the first priority of the frequency corresponding to the serving cell. The second system information includes the network slice supported by the frequency corresponding to the serving cell. Optionally, the first system information may be the SIB 2, and the second system information may be the newly defined SIB.

For example, it may be assumed that the target network slice is S2. In an example, the system information may indicate, by using "P1" and "{S1, S2}", that the first priority of the frequency corresponding to the serving cell is P1, and the network slices supported by the serving cell 220 are S1 and S2. In this case, the terminal device may determine that the serving cell supports the target network slice S2, and the first priority of the target network slice supported by the frequency corresponding to the serving cell is P1. In another example, the system information may indicate, by using "P1x" and "{S1}", that the first priority of the frequency corresponding to the serving cell is P1x, and the network slice supported by the serving cell 220 is S 1. In this case, the terminal device may determine that the serving cell does not support the target network slice S2, and the system information does not include the first priority of the target network slice supported by the frequency corresponding to the serving cell.

In some other embodiments, the system information includes a first priority of a network slice supported by a frequency corresponding to the serving cell. In this way, the terminal device may determine (for example, indirectly), based on the system information, whether the serving cell supports the target network slice, and if the serving cell supports the target network slice, the terminal device may further determine a first priority of the target network slice supported by the frequency corresponding to the serving cell. Optionally, the system information may be a SIB 2 or a newly defined SIB.

For example, a correspondence between an order of first priorities in the system information and the network slice may be predefined. For example, it is assumed that for three different network slices S1, S2, and S3, three first priorities carried in three fields in the system information correspond to S1, S2, and S3. For example, it may be assumed that the target network slice is S2. In an example, the system information may indicate, by using "P1x, P1, NULL (null)", that the first priorities of the network slices supported by the frequency corresponding to the serving cell are respectively P1x, P1, and null. In this case, the terminal device may determine that the serving cell supports the target network slice S2, and the first priority of the target network slice supported by the frequency corresponding to the serving cell is P1. In another example, the system information may indicate, by using "P1x, NULL, NULL", that the first priorities of the network slices supported by the frequency corresponding to the serving cell are respectively P1x, NULL, and NULL. In this case, the terminal device may determine that the serving cell does not support the target network slice S2, and the first priority of the target network slice supported by the frequency corresponding to the serving cell in the system information is null, or it is considered that the system information does not include the first priority of the target network slice supported by the frequency corresponding to the serving cell.

In some other embodiments, the system information includes a network slice supported by a frequency corresponding to the serving cell and a first priority of the network slice supported by the frequency corresponding to the serving cell. In this way, the terminal device may determine (for example, directly), based on the system information, whether the serving cell supports the target network slice, and if the serving cell supports the target network slice, the terminal device may further determine a first priority of the target network slice supported by the frequency corresponding to the serving cell. Optionally, the system information may be a SIB 2 or a newly defined SIB.

For example, it may be assumed that the target network slice is S2. In an example, the system information may indicate, by using "{S1, P1x}, {S2, P1}", that the network slices supported by the serving cell 220 are S1 and S2, the first priority of the network slice S1 supported by the serving cell 220 is P1x, and the first priority of the network slice S2 supported by the serving cell is P1. In this case, the terminal device may determine that the serving cell supports the target network slice S2, and the first priority of the target network slice supported by the frequency corresponding to the serving cell is P1. In another example, the system information may indicate, by using {S1, P1x}, that the network slice supported by the serving cell 220 is S1, and the first priority of the network slice S1 supported by the serving cell 220 is P1x. In this case, the terminal device may determine that the serving cell does not support the target network slice S2, and the system information does not include the first priority of the target network slice supported by the frequency corresponding to the serving cell.

In some other embodiments, the system information includes a network slice supported by a frequency corresponding to the serving cell and a second priority of the network slice supported by the frequency corresponding to the neighboring cell. Optionally, the system information may be a newly defined SIB. Alternatively, optionally, the system information may include first system information and second system information. The first system information includes the network slice supported by the frequency corresponding to the serving cell. The second system information includes the second priority of the network slice supported by the frequency corresponding to the neighboring cell. Optionally, the first system information may be a SIB 2, and the second system information may be a SIB 4 and/or a SIB 5.

For example, the system information may indicate, by using "{S1, P21}, {S2, P22}", that the network slices supported by the frequency corresponding to the neighboring cell 230-1 are S 1 and S2, a second priority of S 1 supported by the frequency corresponding to the neighboring cell 230-1 is P21, and a second priority of S2 supported by the frequency corresponding to the neighboring cell 230-1 is P22. In this case, the terminal device may determine that the frequency corresponding to the neighboring cell 230-1 supports the target network slice S2, and the second priority of the target network slice S2 supported by the frequency corresponding to the neighboring cell 230-1 is P22. The second priority of the network slice supported by the frequency corresponding to the neighboring cell is similar to the first priority, described above, of the network slice supported by the frequency corresponding to the serving cell. Therefore, details are not described herein again.

In some other embodiments, the system information includes a first priority of a frequency corresponding to the serving cell, a network slice supported by the frequency corresponding to the serving cell, and a second priority of the network slice supported by the frequency corresponding to the neighboring cell. Optionally, the system information may be a newly defined SIB. Alternatively, optionally, the system information may include first system information and second system information. The first system information includes the first priority of the frequency corresponding to the serving cell and the network slice supported by the frequency corresponding to the serving cell. The second system information includes the second priority of the network slice supported by the frequency corresponding to the neighboring cell. Alternatively, the first system information includes the first priority of the frequency corresponding to the serving cell. The second system information includes the network slice supported by the frequency corresponding to the serving cell and the second priority of the network slice supported by the frequency corresponding to the neighboring cell. Optionally, the first system information may be a SIB 2, and the second system information may be a SIB 4 and/or a SIB 5.

In this way, according to the foregoing embodiments, the system information may include at least one of the following: the network slice supported by the frequency corresponding to the serving cell or the first priority of the network slice supported by the frequency corresponding to the serving cell. Therefore, the terminal device can determine, based on the system information, whether the serving cell supports the target network slice.

In some embodiments, the system information includes the network slice supported by the frequency corresponding to the neighboring cell, and indication information corresponding to the network slice supported by the frequency corresponding to the neighboring cell, where the indication information indicates whether the serving cell supports the network slice supported by the frequency corresponding to the neighboring cell. Optionally, the system information may be a SIB 4 and/or a SIB 5. Optionally, the system information may be a newly defined SIB.

For example, first indication information may indicate that the serving cell supports the network slice, and second indication information indicates that the serving cell does not support the network slice. For example, the first indication information is 1, and the second indication information is 0; or the first indication information is 0, and the second indication information is 1. It may be understood that, this is merely an example. The first indication information and/or the second indication information may use another manner. The first indication information and/or the second indication information may occupy a preset quantity of bits, for example, one or more bits.

That the first indication information is 1 and the second indication information is 0 is used as an example. The system information may indicate, by using " {S1, 1], {S2, 1}", that the network slices supported by the frequency corresponding to the neighboring cell 230-1 are S 1 and S2, the serving cell 220 supports the network slice S1, and the serving cell 220 also supports the network slice S2. In this case, the terminal device may determine, based on the system information, that the serving cell 220 supports the target network slice S2, and determine that the frequency corresponding to the neighboring cell 230-1 supports the target network slice S2.

In some other embodiments, the system information includes a second priority of the network slice supported by the frequency corresponding to the neighboring cell, and indication information corresponding to the network slice supported by the frequency corresponding to the neighboring cell, where the indication information indicates whether the serving cell supports the network slice supported by the frequency corresponding to the neighboring cell. Optionally, the system information may be a SIB 4 and/or a SIB 5. Optionally, the system information may be a newly defined SIB.

For example, a correspondence between an order of second priorities in the system information and the network slice may be predefined. For example, it is assumed that for three different network slices S1, S2, and S3, three second priorities carried in three fields in the system information correspond to S1, S2, and S3. For example, it may be assumed that the target network slice is S2. The system information may indicate, by using "{P21, 1}, {P22, 1}, {NULL, NULL}", that a second priority of the network slice S 1 supported by the frequency corresponding to the neighboring cell 230-1 is P21, a second priority of the network slice S2 supported by the frequency corresponding to the neighboring cell 230-1 is P22, the serving cell 220 supports the network slice S1, and the serving cell 220 also supports the network slice S2. In this case, the terminal device may determine, based on the system information, that the serving cell 220 supports the target network slice S2, and determine (for example, indirectly) that the frequency corresponding to the neighboring cell 230-1 supports the target network slice S2 and that a second priority of the target network slice S2 supported by the frequency corresponding to the neighboring cell 230-1 is P22.

In some other embodiments, the system information includes the network slice supported by the frequency corresponding to the neighboring cell, a second priority of the network slice supported by the frequency corresponding to the neighboring cell, and indication information corresponding to the network slice supported by the frequency corresponding to the neighboring cell, where the indication information indicates whether the serving cell supports the network slice supported by the frequency corresponding to the neighboring cell. Optionally, the system information may be a SIB 4 and/or a SIB 5. Optionally, the system information may be a newly defined SIB.

For example, it may be assumed that the target network slice is S2. The system information may indicate, by using " { S 1, P21, 1}, { S2, P22, 1}", that the frequency corresponding to the neighboring cell 230-1 supports network slices S1 and S2, a second priority of the network slice S1 supported by the frequency corresponding to the neighboring cell 230-1 is P21, a second priority of the network slice S2 supported by the frequency corresponding to the neighboring cell 230-1 is P22, the serving cell 220 supports the network slice S1, and the serving cell 220 also supports the network slice S2. In this case, the terminal device may determine, based on the system information, that the serving cell 220 supports the target network slice S2, and determine (for example, directly) that the frequency corresponding to the neighboring cell 230-1 supports the target network slice S2 and that a second priority of the target network slice S2 supported by the frequency corresponding to the neighboring cell 230-1 is P22.

In some other embodiments, the system information includes a first priority of a network slice supported by a frequency corresponding to the serving cell, the network slice supported by the frequency corresponding to the neighboring cell, and indication information corresponding to the network slice supported by the frequency corresponding to the neighboring cell, where the indication information indicates whether the serving cell supports the network slice supported by the frequency corresponding to the neighboring cell. Optionally, the system information may be a SIB 4 and/or a SIB 5. Optionally, the system information may be a newly defined SIB. Optionally, the system information may include first system information and second system information. The first system information includes the first priority of the network slice supported by the frequency corresponding to the serving cell. The second system information includes the network slice supported by the frequency corresponding to the neighboring cell and the indication information corresponding to the network slice supported by the frequency corresponding to the neighboring cell. Optionally, the first system information may be a SIB 2, and the second system information may be the SIB 4 and/or the SIB 5.

In some other embodiments, the system information includes a first priority of a network slice supported by a frequency corresponding to the serving cell, a second priority of the network slice supported by the frequency corresponding to the neighboring cell, and indication information corresponding to the network slice supported by the frequency corresponding to the neighboring cell, where the indication information indicates whether the serving cell supports the network slice supported by the frequency corresponding to the neighboring cell. Optionally, the system information may be a SIB 4 and/or a SIB 5. Optionally, the system information may be a newly defined SIB. Optionally, the system information may include first system information and second system information. The first system information includes the first priority of the network slice supported by the frequency corresponding to the serving cell. The second system information includes the second priority of the network slice supported by the frequency corresponding to the neighboring cell and the indication information corresponding to the network slice supported by the frequency corresponding to the neighboring cell. Optionally, the first system information may be a SIB 2, and the second system information may be the SIB 4 and/or the SIB 5.

In some other embodiments, the system information includes a first priority of a network slice supported by a frequency corresponding to the serving cell, the network slice supported by the frequency corresponding to the neighboring cell, a second priority of the network slice supported by the frequency corresponding to the neighboring cell, and indication information corresponding to the network slice supported by the frequency corresponding to the neighboring cell, where the indication information indicates whether the serving cell supports the network slice supported by the frequency corresponding to the neighboring cell. Optionally, the system information may be a SIB 4 and/or a SIB 5. Optionally, the system information may be a newly defined SIB. Optionally, the system information may include first system information and second system information. The first system information includes the first priority of the network slice supported by the frequency corresponding to the serving cell. The second system information includes the network slice supported by the frequency corresponding to the neighboring cell, the second priority of the network slice supported by the frequency corresponding to the neighboring cell, and the indication information corresponding to the network slice supported by the frequency corresponding to the neighboring cell. Optionally, the first system information may be a SIB 2, and the second system information may be the SIB 4 and/or the SIB 5.

In this way, according to the foregoing embodiments, the system information may include at least one of the following: the indication information corresponding to the network slice supported by the frequency corresponding to the neighboring cell. In this way, the terminal device can determine, based on the system information, whether the serving cell supports the target network slice. This indication manner is simple, and signaling interaction overheads are less.

In the foregoing descriptions of the system information, the system information may indicate, by using the identifier of the network slice, that the system information includes the network slice supported by the frequency corresponding to the serving cell. Similarly, the system information may indicate, by using the identifier of the network slice, that the system information includes the network slice supported by the frequency corresponding to the neighboring cell. The identifier of the network slice may be at least one of the following: (1) S-NSSAI, (2) a slice identifier (Slice ID), (3) a slice group identifier (Slice group ID), (4) an access category (Access Category, AC), or (5) an access identity (Access Identity, AI).

In the foregoing descriptions of the system information, the system information may indicate, by using a "cell reselection priority (cell reselection priority)", the first priority of the network slice supported by the frequency corresponding to the serving cell and/or the second priority of the network slice supported by the frequency corresponding to the neighboring cell. It may be understood that, if a plurality of network slices are used, there is a "cell reselection priority" for an identifier of each (each) network slice. For example, the first priority of the network slice supported by the frequency corresponding to the serving cell and/or the second priority of the network slice supported by the frequency corresponding to the neighboring cell may be carried in a "cell reselection priority" field in the system information.

Optionally, the "cell reselection priority" may correspond to the identifier of the network slice. In an example, the identifier of the network slice may be the S-NSSAI, and the corresponding "cell reselection priority" is an "S-NSSAI cell reselection priority (S-NSSAI cell reselection priority)". In another example, the identifier of the network slice may be the slice ID, and the corresponding "cell reselection priority" is a "slice ID cell reselection priority (Slice ID cell reselection priority)". In another example, the identifier of the network slice may be the slice group ID, and the corresponding "cell reselection priority" is a "slice group ID cell reselection priority (Slice Group ID cell reselection priority)". In still another example, the identifier of the network slice may be the AC, and the corresponding "cell reselection priority" is an "AC cell reselection priority (Access Category cell reselection priority)". In yet another example, the identifier of the network slice may be the AI, and the corresponding "cell reselection priority" is an "AI cell reselection priority (Access Identity cell reselection priority)".

It may be understood that, the foregoing descriptions of the system information are merely examples. For example, the system information may be one or more of the SIB 2, the SIB 4, the SIB 5, or the newly defined SIB, the first system information may be one or more of the SIB 2, the SIB 4, the SIB 5, or the newly defined SIB, and the second system information may be one or more of the SIB 2, the SIB 4, the SIB 5, or the newly defined SIB. In addition, it may be understood that, the foregoing listed embodiments are not exhaustive, and a person skilled in the art may further obtain another embodiment based on the foregoing embodiments. In addition, the foregoing embodiments may be combined and replaced with each other on the premise that the foregoing embodiments are not contradictory.

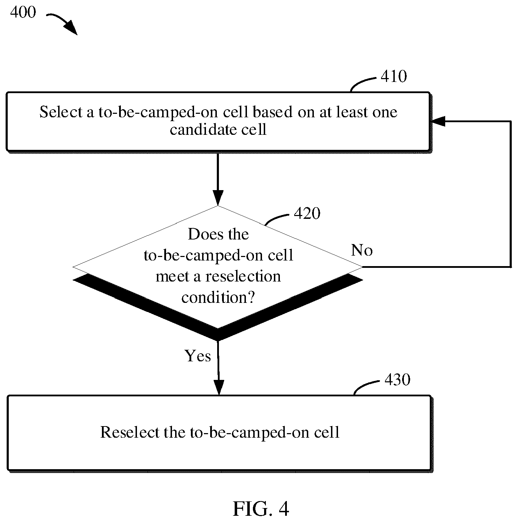

FIG. 4 is another schematic flowchart of a cell reselection method 400 according to an embodiment of this disclosure. The method 400 in FIG. 4 includes steps 410 to 430.

410: Select a to-be-camped-on cell based on at least one candidate cell.

420: Determine whether the to-be-camped-on cell meets a reselection condition; and if the to-be-camped-on cell does not meet the reselection condition, return to 410 to reselect a to-be-camped-on cell; or if the to-be-camped-on cell meets the reselection condition, perform 430.

430: Reselect the to-be-camped-on cell when the to-be-camped-on cell meets the reselection condition.

In an implementation of 410, the to-be-camped-on cell may be selected from a serving cell and the at least one candidate cell.

In some embodiments, if the serving cell supports a target network slice, the to-be-camped-on cell may be selected from the serving cell and the at least one candidate cell based on a first priority of the target network slice supported by a frequency corresponding to the serving cell and a second priority of a target network slice supported by a frequency corresponding to the candidate cell.

It may be understood that, the first priority of the target network slice supported by the frequency corresponding to the serving cell and the second priority of the target network slice supported by the frequency corresponding to the candidate cell may be obtained from system information. As described above, details are not described herein again.

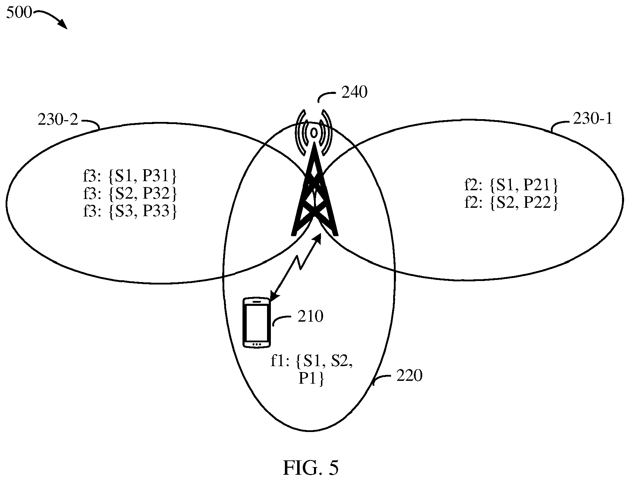

FIG. 5 is a schematic diagram of another communication system 500 according to an embodiment of this disclosure. Based on the system 200 in FIG. 2, the system 500 in FIG. 5 marks information about a network slice supported by a frequency corresponding to a serving cell and information about a network slice supported by a frequency corresponding to a neighboring cell.

As shown in the figure, in a serving cell 220, "f1: {S1, S2, P1}" indicates that network slices supported by a frequency f1 corresponding to the serving cell 220 are S1 and S2, a priority of S1 supported by f1 is P1, and a priority of S2 supported by f1 is also P1.

In a neighboring cell 230-1, "f2: {Sl, P21}, f2: {S2, P22}" indicates that network slices supported by a frequency f2 corresponding to the neighboring cell 230-1 are S1 and S2, a second priority of S1 supported by f2 is P21, and a second priority of S2 supported by f2 is P22.

In a neighboring cell 230-2, "f3: {S1, P31}, f3: {S2, P32}, f3: {S3, P33}" indicates that network slices supported by a frequency f3 corresponding to the neighboring cell 230-2 are S1, S2, and S3, a second priority of S 1 supported by f3 is P31, a second priority of S2 supported by f3 is P32, and a second priority of S3 supported by f3 is P33.

It should be noted that, FIG. 5 shows the frequency f 1 corresponding to the serving cell 220, the frequency f2 corresponding to the neighboring cell 230-1, and the frequency f3 corresponding to the neighboring cell 230-2. Optionally, system information may include the frequency corresponding to the serving cell and/or the frequency corresponding to the neighboring cell. Optionally, a terminal device 210 may obtain, from other signaling, the frequency corresponding to the serving cell and/or the frequency corresponding to the neighboring cell, for example, from a MIB or a SIB 1. This is not limited in this disclosure. In addition, the frequency corresponding to the serving cell and the frequency corresponding to the neighboring cell are also shown in the following another communication system by using a figure. Similar understandings and explanations should be made, and details are not repeated again in the following.

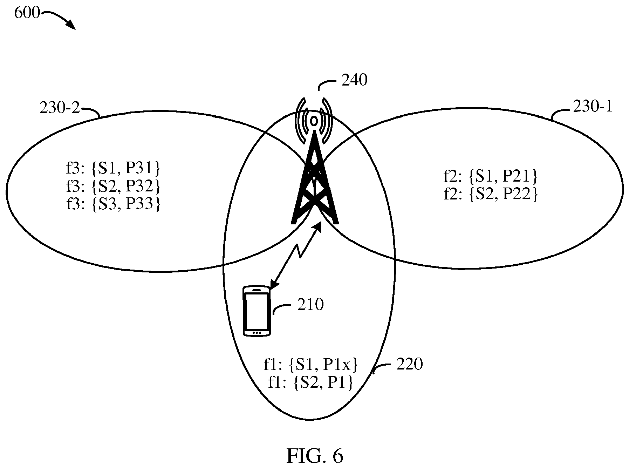

FIG. 6 is a schematic diagram of another communication system 600 according to an embodiment of this disclosure. Based on the system 200 in FIG. 2, the system 600 in FIG. 6 marks information about a network slice supported by a frequency corresponding to a serving cell and information about a network slice supported by a frequency corresponding to a neighboring cell.

As shown in the figure, in a serving cell 220, "f1: {S1, P1x}, f1: {S2, P1}" indicates that network slices supported by a frequency f1 corresponding to the serving cell 220 are S1 and S2, a priority of S1 supported by f1 is P1x, and a priority of S2 supported by f1 is P1.

As shown in FIG. 6, information, for example, second priorities of network slices supported by frequencies corresponding to a neighboring cell 230-1 and a neighboring cell 230-2, is the same as that in FIG. 5, and details are not repeated herein again.

In an implementation in which the serving cell supports a target network slice, if a "second priority of a target network slice supported by a frequency corresponding to at least one candidate cell" is higher than a "first priority of the target network slice supported by the frequency corresponding to the serving cell", a candidate cell whose "second priority of a target network slice supported by a frequency corresponding to the candidate cell" is the largest may be determined as a to-be-camped-on cell. If no "second priority of a target network slice supported by a frequency corresponding to a candidate cell" is higher than a "first priority of the target network slice supported by the frequency corresponding to the serving cell", and a "second priority of a target network slice supported by a frequency corresponding to at least one candidate cell" is equal to the "first priority of the target network slice supported by the frequency corresponding to the serving cell", a to-be-camped-on cell is selected based on a first criterion. If a "second priority of a target network slice supported by a frequency corresponding to a candidate cell" is lower than a "first priority of the target network slice supported by the frequency corresponding to the serving cell", a to-be-camped-on cell is selected based on a second criterion. For the first criterion and the second criterion, the following further provides explanations.

In the following, it is assumed that the target network slice is S2, and descriptions are provided by using examples with reference to the communication system 500 in FIG. 5 and the communication system 600 in FIG. 6.

In the communication systems shown in FIG. 5 and FIG. 6, the frequency f1 corresponding to the serving cell 220 supports S2, and the first priority of S2 is P1. The frequency f2 corresponding to the neighboring cell 230-1 supports the network slice S2, and the second priority of S2 supported by f2 is P22. The frequency f3 corresponding to the neighboring cell 230-2 supports the network slice S2, and the second priority of S2 supported by f3 is P32.

In this example, P1 may be compared with P22 and P32, and there are different cases.

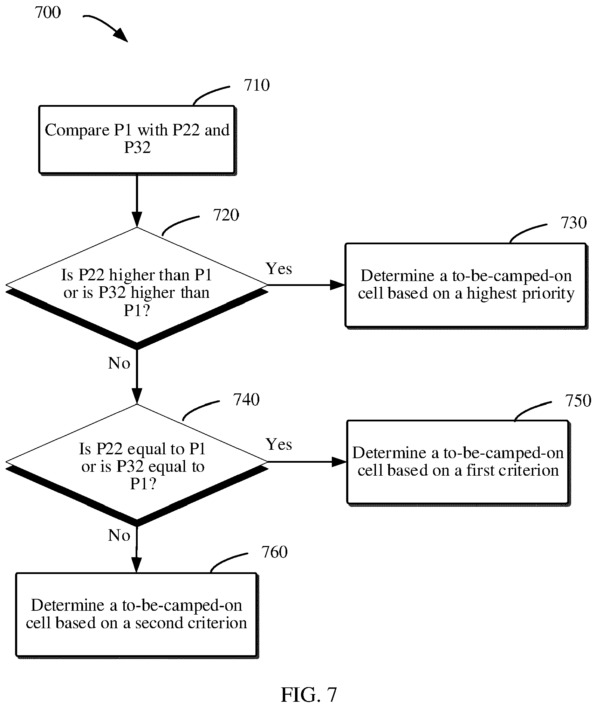

FIG. 7 is a schematic flowchart of a process 700 of selecting a to-be-camped-on cell according to an embodiment of this disclosure. The process 700 shown in FIG. 7 includes the following steps.

710: Compare P1 with P22 and compare P1 with P32.

720: If a comparison result is that P22 is higher than P1 or P32 is higher than P1, perform 730; otherwise, perform 740.

730: Determine the to-be-camped-on cell based on a highest priority. For example, if the highest priority of P1, P22, and P32 is P22, a neighboring cell 230-1 corresponding to P22 is determined as the to-be-camped-on cell. If the highest priority of P1, P22, and P32 is P32, a neighboring cell 230-2 corresponding to P32 is determined as the to-be-camped-on cell.

740: If the comparison result is that P22 is equal to P1 and/or P32 is equal to P1, perform 750; otherwise, perform 760.

750: Determine the to-be-camped-on cell based on a first criterion. For example, the first criterion may be an R criterion.

The R criterion is to calculate an R (rank, Rank) value for each neighboring cell and an R value for each serving cell based on cell signal quality. Then, the cells are sorted based on the R values. If the R value of the neighboring cell is greater than the R value of the serving cell, it is considered that a reselection criteria is met. If a plurality of neighboring cells meet the reselection criteria, a neighboring cell with a largest R value is selected.

For example, if P22=P32=P1, a cell, with a largest R value, of a serving cell 220, the neighboring cell 230-1, and the neighboring cell 230-2 is determined as the to-be-camped-on cell. If P22=P1 and P32<P1, a cell, with a larger R value, of a serving cell 220 and the neighboring cell 230-1 is determined as the to-be-camped-on cell. If P32=P1 and P22<P1, a cell, with a larger R value, of a serving cell 220 and the neighboring cell 230-2 is determined as the to-be-camped-on cell.

An R value of the serving cell 220 may be represented as Rs, and is obtained by using the following formula: Rs=Qmeas,s+Qhyst-Qoffsettemp.

An R value of the neighboring cell 230 may be represented as Rn, and is obtained by using the following formula: Rn=Qmeas,n-Qoffset-Qoffsettemp.

In the foregoing formula, Qmeas,s represents signal quality of the serving cell, and is obtained by a terminal device 210 through measurement. For example, Qmeas,s may represent a reference signal received power (Reference Signal Received Power, RSRP) value of the serving cell. Qmeas,n represents signal quality of the neighboring cell, and is obtained by the terminal device 210 through measurement. For example, Qmeas,n may represent an RSRP value of the neighboring cell.

In the foregoing formula, Qhyst represents a reselection hysteresis value of the serving cell. The value may be obtained by the terminal device 210 from system information, for example, from a SIB 2. In an example, Qhyst may be carried in a cell reselection information common (cell reselection Info Common) field of the SIB 2. It may be understood that, a larger value of Qhyst indicates a larger boundary of the serving cell, and therefore it is more difficult to reselect the neighboring cell.

In the foregoing formula, Qoffset represents a neighboring cell offset. If the neighboring cell is an intra-frequency neighboring cell, Qoffset=Qoffsetcell. If the neighboring cell is an inter-frequency neighboring cell, Qoffset=QoffsetCell+QoffsetFreq, where Qoffsetcell, QoffsetCell, and QoffsetFreq are obtained by the terminal device 210 from the system information. For example, Qoffsetcell may be obtained from a SIB 3, and QoffsetCell and QoffsetFreq may be obtained from a SIB 4. In an example, Qoffsetcell may be carried in an intra-frequency neighboring cell information (Intra Freq Neigh Cell Info) field of the SIB 3. In an example, QoffsetCell and QoffsetFreq may be carried in an inter-frequency carrier frequency information (Inter Freq Carrier Freq Info) field of the SIB 4.

In the foregoing formula, Qoffsettemp is a calculation parameter for the first criterion (the R criterion). The parameter may be obtained by the terminal device 210 from the system information, for example, from a SIB 1.

760: Determine the to-be-camped-on cell based on a second criterion.

For example, the second criterion may be that a candidate cell whose cell quality is higher than quality of the serving cell is determined as the to-be-camped-on cell. Optionally, the cell quality may be RSRP of the cell.

In some other embodiments, if the serving cell does not support a target network slice, the to-be-camped-on cell may be selected from the serving cell and at least one candidate cell based on a first priority of the target network slice on a frequency corresponding to the serving cell and a second priority of a target network slice supported by a frequency corresponding to the candidate cell.

It may be understood that, the second priority of the target network slice supported by the frequency corresponding to the candidate cell may be obtained from the system information. As described above, details are not described herein again. It may be understood that, because the serving cell does not support the target network slice, the terminal device 210 cannot obtain, from the system information, a first priority of a target network slice supported by the frequency corresponding to the serving cell.

In this embodiment in which the serving cell does not support the target network slice, the terminal device 210 may set, to a first preset value, the first priority of the target network slice on the frequency corresponding to the serving cell, where the first preset value is lower than the second priority of the target network slice supported by the frequency corresponding to the candidate cell. In this way, even if the serving cell does not support the target network slice, the first priority of the target network slice on the frequency corresponding to the serving cell may also be defined by setting the first preset value, so that the serving cell is considered during cell reselection.

In this embodiment in which the serving cell does not support the target network slice, the first priority of the target network slice on the frequency corresponding to the serving cell may be compared with the second priority of the target network slice supported by the frequency corresponding to the candidate cell, and the to-be-camped-on cell is selected based on a comparison result. This process is similar to the process in the foregoing embodiment corresponding to FIG. 7, and details are not described herein again.

In another implementation of 410, the to-be-camped-on cell may be selected from the at least one candidate cell. For example, if the serving cell does not support the target network slice, the to-be-camped-on cell may be selected from the at least one candidate cell based on the second priority of the target network slice supported by the frequency corresponding to the candidate cell.

It may be understood that, the second priority of the target network slice supported by the frequency corresponding to the candidate cell may be obtained from the system information. As described above, details are not described herein again.

Specifically, if there is only one candidate cell, the candidate cell may be determined as the to-be-camped-on cell. On the contrary, if a quantity of the at least one candidate cell is greater than or equal to 2 (that is, there are at least two candidate cells), the to-be-camped-on cell may be selected from the at least two candidate cells by comparing second priorities of network slices supported by frequencies corresponding to the candidate cells.

For example, the at least two second priorities of the network slices supported by the frequencies corresponding to the at least two candidate cells may be compared. If the at least two second priorities of the network slices supported by the frequencies corresponding to the at least two candidate cells are not equal to each other, a candidate cell whose second priority of a network slice supported by a frequency corresponding to the candidate cell is the largest is determined as the to-be-camped-on cell. If any two of the at least two second priorities of the network slices supported by the frequencies corresponding to the at least two candidate cells are equal, the to-be-camped-on cell is selected based on the first criterion.

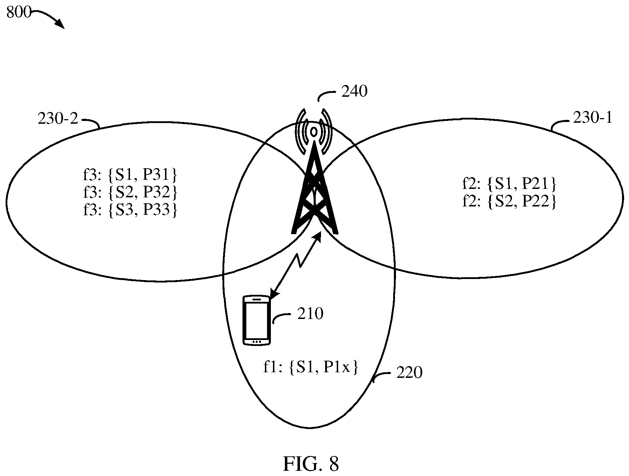

In the following, it is assumed that the target network slice is S2, and descriptions are provided by using examples with reference to a communication system 800 in FIG. 8.

FIG. 8 is a schematic diagram of another communication system 800 according to an embodiment of this disclosure. Based on the system 200 in FIG. 2, the system 800 in FIG. 8 marks information about a network slice supported by a frequency corresponding to a serving cell and information about a network slice supported by a frequency corresponding to a neighboring cell.

As shown in the figure, in a serving cell 220, "f1: {Sl, P1x}" indicates that a network slice supported by a frequency f 1 corresponding to the serving cell 220 is S 1, and a priority of S1 supported by f1 is P1x. It can be learned that, the frequency f1 corresponding to the serving cell 220 does not support a target network slice S2.

As shown in FIG. 8, information, for example, second priorities of network slices supported by frequencies corresponding to a neighboring cell 230-1 and a neighboring cell 230-2, is the same as that in FIG. 5, and details are not repeated herein again.

In the communication system 800 shown in FIG. 8, the serving cell 220 does not support S2. The frequency f2 corresponding to the neighboring cell 230-1 supports the network slice S2, and the second priority of S2 supported by f2 is P22. The frequency f3 corresponding to the neighboring cell 230-2 supports the network slice S2, and the second priority of S2 supported by f3 is P32.

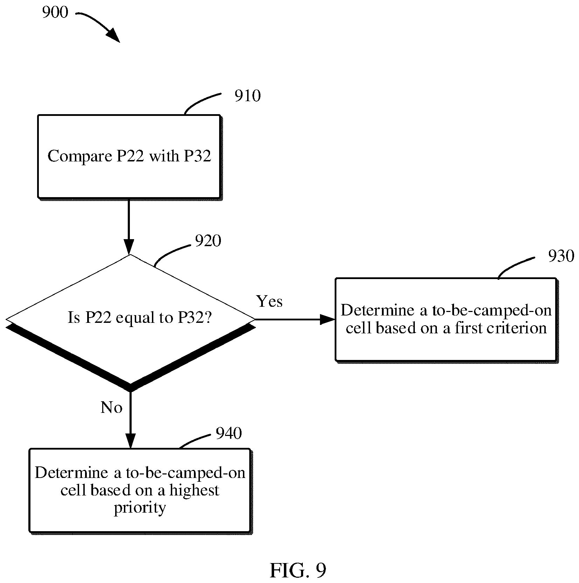

In the communication system 800 shown in FIG. 8, P22 may be compared with P32. For details, refer to descriptions in FIG. 9.

FIG. 9 is another schematic flowchart of a process 900 of selecting a to-be-camped-on cell according to an embodiment of this disclosure. The process 900 shown in FIG. 9 includes the following steps.

910: Compare P22 with P32.

920: If a comparison result is that P22 is equal to P32, perform 930; otherwise, perform 940.

930: Determine the to-be-camped-on cell based on a first criterion.

For example, the first criterion may be an R criterion. In this example, an R value of a neighboring cell 230-1 and an R value of a neighboring cell 230-2 may be calculated, and a neighboring cell with a larger R value is determined as the to-be-camped-on cell. For example, if the R value of the neighboring cell 230-1 is greater than the R value of the neighboring cell 230-2, the neighboring cell 230-1 is determined as the to-be-camped-on cell. If the R value of the neighboring cell 230-1 is less than the R value of the neighboring cell 230-2, the neighboring cell 230-2 is determined as the to-be-camped-on cell.

The R value of the neighboring cell may be calculated by using a formula: Rn=Qmeas,n-Qoffset-Qoffsettemp. For descriptions of the formula, refer to the descriptions of 750 in FIG. 7. For brevity, details are not repeated herein again.

940: Determine the to-be-camped-on cell based on a highest priority.

For example, if P22 is greater than P32, the neighboring cell 230-1 is determined as the to-be-camped-on cell. If P22 is less than P32, the neighboring cell 230-2 is determined as the to-be-camped-on cell.

In this way, in this embodiment of this disclosure, to perform slice communication, a terminal device may consider only a frequency that supports a target network slice, and does not consider a frequency that does not support the target network slice. In this way, during selection of the to-be-camped-on cell, comparison and selection may be performed for a small range, thereby reducing a calculation amount and improving processing efficiency.

In still another implementation of 410, the terminal device may select the to-be-camped-on cell from a serving cell and the neighboring cell, where the neighboring cell includes at least one candidate cell.

Specifically, the to-be-camped-on cell may be selected based on at least one of the following: a first priority of the target network slice on a frequency corresponding to the serving cell, a second priority of a target network slice supported by a frequency corresponding to the candidate cell, and a second priority of the target network slice on a frequency corresponding to a non-candidate cell other than the at least one candidate cell in the neighboring cell.

In some embodiments, if the serving cell supports the target network slice, and all neighboring cells are candidate cells (to be specific, all frequencies corresponding to the neighboring cells support the target network slice), the to-be-camped-on cell may be selected based on a first priority of the target network slice supported by the frequency corresponding to the serving cell and the second priority of the target network slice supported by the frequency corresponding to the candidate cell. It may be understood that, in this embodiment, the first priority of the target network slice on the frequency corresponding to the serving cell is the first priority of the target network slice supported by the frequency corresponding to the serving cell.

In some other embodiments, if the serving cell does not support the target network slice, and all neighboring cells are candidate cells (to be specific, all frequencies corresponding to the neighboring cells support the target network slice), the to-be-camped-on cell may be selected based on the first priority of the target network slice on the frequency corresponding to the serving cell and the second priority of the target network slice supported by the frequency corresponding to the candidate cell. In this embodiment, the terminal device may set, to a first preset value, the first priority of the target network slice on the frequency corresponding to the serving cell, where the first preset value is lower than the second priority of the target network slice supported by the frequency corresponding to the candidate cell.

In some other embodiments, if the serving cell supports the target network slice, and the neighboring cell includes the candidate cell and the non-candidate cell, where the frequency corresponding to the candidate cell supports the target network slice, and the frequency corresponding to the non-candidate cell does not support the target network slice, the terminal device may select the to-be-camped-on cell from the serving cell and the neighboring cell based on a first priority of the target network slice supported by the frequency corresponding to the serving cell, the second priority of the target network slice supported by the frequency corresponding to the candidate cell, and the second priority of the target network slice on the frequency corresponding to the non-candidate cell.

It may be understood that, in this embodiment, the first priority of the target network slice on the frequency corresponding to the serving cell is the first priority of the target network slice supported by the frequency corresponding to the serving cell. It may be understood that, because the non-candidate cell does not support the target network slice, the terminal device cannot obtain, from system information, a second priority of a target network slice supported by the frequency corresponding to the non-candidate cell.

In this embodiment, the terminal device may set, to a second preset value, the second priority of the target network slice on the frequency corresponding to the non-candidate cell, where the second preset value is lower than the second priority of the target network slice supported by the frequency corresponding to the candidate cell.

In some other embodiments, if the serving cell does not support the target network slice, and the neighboring cell includes the candidate cell and the non-candidate cell, where the frequency corresponding to the candidate cell supports the target network slice, and the frequency corresponding to the non-candidate cell does not support the target network slice, the terminal device may select the to-be-camped-on cell from the serving cell and the neighboring cell based on the first priority of the target network slice on the frequency corresponding to the serving cell, the second priority of the target network slice supported by the frequency corresponding to the candidate cell, and the second priority of the target network slice on the frequency corresponding to the non-candidate cell.

It may be understood that, in this embodiment, because the serving cell and the non-candidate cell do not support the target network slice, the terminal device cannot obtain, from system information, a first priority of a target network slice supported by the frequency corresponding to the serving cell, and cannot obtain a second priority of a target network slice supported by the frequency corresponding to the non-candidate cell. In this embodiment, the terminal device may set, to a first preset value, the first priority of the target network slice on the frequency corresponding to the serving cell, where the first preset value is lower than the second priority of the target network slice supported by the frequency corresponding to the candidate cell. The terminal device may set, to a second preset value, the second priority of the target network slice on the frequency corresponding to the non-candidate cell, where the second preset value is lower than the second priority of the target network slice supported by the frequency corresponding to the candidate cell.

The first preset value and the second preset value may be equal or unequal. This is not limited in this disclosure. The first preset value and the second preset value each are less than the second priority of the target network slice supported by the frequency corresponding to the candidate cell. For example, the first preset value may be a lowest value of all the compared first priorities and the second preset value may be a lowest value of all the compared second priorities. In some examples, the first preset value and the second preset value may each be equal to a lowest value in a priority value range. In an example, when the priority value range is 0 to 7, the terminal device may set the first preset value and the second preset value to 0. In this manner, during priority comparison, a frequency that does not support the target network slice may be used as a last considered frequency or the frequency that does not support the target network slice is completely excluded.

In this way, even for the frequency corresponding to the non-candidate cell that does not support the target network slice, the second priority of the target network slice supported by the frequency corresponding to the non-candidate cell may be defined by setting the second preset value. Further, the terminal device 210 may compare the first priority of the target network slice supported by the frequency corresponding to the serving cell with a second priority of the target network slice supported by the frequency corresponding to the neighboring cell, and select the to-be-camped-on cell based on a comparison result.

The comparison process is similar to the foregoing process described with reference to FIG. 7. To avoid repetition, details are not described herein again.

In this way, the terminal device can select the to-be-camped-on cell based on the target network slice, so that it can be ensured that the to-be-camped-on cell supports the target network slice, and a service requirement of the terminal device can be met.

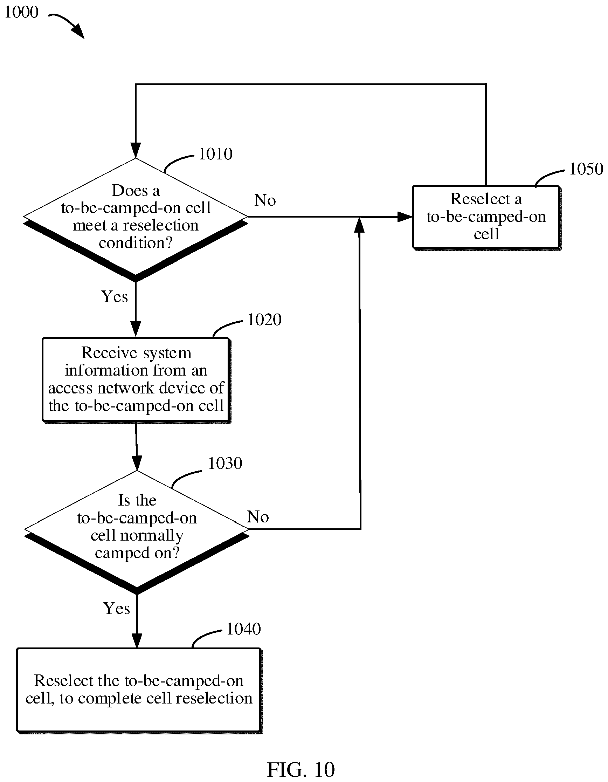

The following describes 420 and 430 in FIG. 4 with reference to FIG. 10.

FIG. 10 is a schematic flowchart of a cell reselection method 1000 according to an embodiment of this disclosure. The process 1000 shown in FIG. 10 includes the following steps.

1010: A terminal device 210 determines whether a to-be-camped-on cell meets a reselection condition; and if the to-be-camped-on cell meets the reselection condition, perform 1020; otherwise, perform 1050.

For example, the reselection condition is related to a second priority of a target network slice supported by a frequency corresponding to the to-be-camped-on cell. If the second priority of the target network slice supported by the frequency corresponding to the to-be-camped-on cell (for example, the to-be-camped-on cell determined in 730 in FIG. 7) is higher than a first priority of a target network slice supported by a frequency corresponding to a serving cell, or if the second priority of the target network slice supported by the frequency corresponding to the to-be-camped-on cell (for example, the to-be-camped-on cell determined in 940 in FIG. 9) is higher than a second priority of a target network slice supported by a frequency corresponding to another candidate cell, the reselection condition may also be referred to as a high-priority reselection condition. If the second priority of the target network slice supported by the frequency corresponding to the to-be-camped-on cell (for example, the to-be-camped-on cell determined in 750 in FIG. 7) is equal to a first priority of a target network slice supported by a frequency corresponding to a serving cell, or if the second priority of the target network slice supported by the frequency corresponding to the to-be-camped-on cell (for example, the to-be-camped-on cell determined in 930 in FIG. 9) is equal to a second priority of a target network slice supported by a frequency corresponding to another candidate cell, the reselection condition may also be referred to an equal-priority reselection condition. If the second priority of the target network slice supported by the frequency corresponding to the to-be-camped-on cell (for example, the to-be-camped-on cell determined in 760 in FIG. 7) is lower than a first priority of a target network slice supported by a frequency corresponding to a serving cell, the reselection condition may also be referred to as a low-priority reselection condition.

With reference to FIG. 7 and FIG. 9, after 730 or 940, it may be determined whether the to-be-camped-on cell meets the high-priority reselection condition. If the to-be-camped-on cell meets the high-priority reselection condition, the to-be-camped-on cell is reselected; otherwise, a to-be-camped-on cell is reselected until reselection is completed.

The process 700 in FIG. 7 is used as an example. The high-priority reselection condition determined after 730 may be: (1) System information (for example, a SIB 2) of the serving cell includes a low quality threshold (Thresh_{Serving,LowQ}) of the serving cell, duration in which the terminal device 210 camps on a serving cell 220 exceeds a first duration threshold (for example, 1 second or another value), and during a first time interval, the to-be-camped-on cell meets that Squal>Thresh_{X,HighQ}. Squal represents quality of the to-be-camped-on cell, Thresh_{X,HighQ} represents a high quality threshold, and the first time interval may be a reselection interval, for example, represented as T_{reselectionRAT}. (2) System information (for example, a SIB 2) of the serving cell does not include a low quality threshold (Thresh_{Serving,LowQ}) of the serving cell, duration in which the terminal device 210 camps on a serving cell 220 exceeds a first duration threshold (for example, 1 second or another value), and during a first time interval, the to-be-camped-on cell meets that Srxlev>Thresh_{X,HighP}. Srxlev represents quality of the to-be-camped-on cell, Thresh_{X,HighP} represents a high quality threshold, and the first time interval may be a reselection interval, for example, represented as T_{reselectionRAT}.

With reference to FIG. 7 and FIG. 9, after 750 or 930, it may be determined whether the to-be-camped-on cell meets the equal-priority reselection condition. If the to-be-camped-on cell meets the equal-priority reselection condition, the to-be-camped-on cell is reselected; otherwise, a to-be-camped-on cell is reselected until reselection is completed.

The process 700 in FIG. 7 is used as an example. The equal-priority reselection condition determined after 750 may be: Duration in which the terminal device 210 camps on a serving cell 220 exceeds a second duration threshold (for example, 1 second or another value), and during a second time interval, the to-be-camped-on cell always meets that an R value of the to-be-camped-on cell is the largest, where the second time interval may be a reselection interval, for example, represented as T_{reselectionRAT}.

With reference to FIG. 7, after 760, it may be determined whether the to-be-camped-on cell meets the low-priority reselection condition. If the to-be-camped-on cell meets the low-priority reselection condition, the to-be-camped-on cell is reselected; otherwise, a to-be-camped-on cell is reselected until cell reselection is completed.

The process 700 in FIG. 7 is used as an example. The low-priority reselection condition determined after 760 may be: (1) System information (for example, a SIB 2) of the serving cell includes a low quality threshold (Thresh_{Serving,LowQ}) of the serving cell, duration in which the terminal device 210 camps on a serving cell 220 exceeds a third duration threshold (for example, 1 second or another value), the serving cell meets that Squal(s)<Thresh_{Serving,LowQ}, and during a third time interval, the to-be-camped-on cell meets that Squal(n)>Thresh_{X,LowQ}. Squal(s) represents quality of the serving cell, Squal(n) represents quality of the to-be-camped-on cell, Thresh_{X,LowQ} represents a low quality threshold, and the third time interval may be a reselection interval, for example, represented as T_{reselectionRAT}. (2) System information (for example, a SIB 2) of the serving cell does not include a low quality threshold (Thresh_{Serving,LowQ}) of the serving cell, duration in which the terminal device 210 camps on a serving cell 220 exceeds a first duration threshold (for example, 1 second or another value), the serving cell meets that Srxlev(s)<Thresh_{Serving,LowP}, and during a third time interval, the to-be-camped-on cell meets that Srxlev(n)>Thresh_{X,LowP}. Srxlev(s) represents quality of the serving cell, Srxlev(n) represents quality of the to-be-camped-on cell, Thresh_{X,LowP} represents a low quality threshold, and the third time interval may be a reselection interval, for example, represented as T_{reselectionRAT}.

In the foregoing reselection conditions, several thresholds (also referred to as threshold values) are used.

Thresh_{X,HighP} and Thresh_{X,HighQ} are two quality thresholds used in the high-priority reselection condition. X may represent a frequency. In other words, different frequencies may have corresponding threshold priorities. For example, a threshold Thresh_{f1,HighP} corresponding to a frequency f1 may not be equal to a threshold Thresh_{f2,HighP} corresponding to a frequency f2. Thresh_{X,HighP} and Thresh_{X,HighQ} may be obtained by the terminal device 210 from the system information. For example, an intra-system inter-frequency threshold may be obtained from a SIB 4. In an example, the threshold may be carried in an inter-frequency carrier frequency information (Inter Freq Carrier Freq Info) field of the SIB 4. An inter-system threshold may be obtained from a SIB 5. In an example, the threshold may be carried in an inter-system carrier frequency (Carrier Freq EUTRA) field of the SIB 5.

Thresh_{Serving,LowP} and Thresh_{Serving,LowQ} are two thresholds used in the low-priority reselection condition, and are respectively a power threshold and a quality threshold of the serving cell. Thresh_{Serving,LowP} and Thresh_{Serving,LowQ} may be obtained by the terminal device 210 from the system information. For example, the threshold may be obtained from the SIB 2. In an example, the threshold may be carried in a cell reselection serving frequency information (cell Reselection Serving Freq Info) field of the SIB 2. Thresh_{X,LowP} and Thresh_{X,LowQ} are two thresholds used in the low-priority reselection condition, and are respectively a power threshold and a quality threshold of a low-priority neighboring cell. X may represent a frequency. In other words, different frequencies may have different corresponding priorities. For example, a threshold Thresh_{f1,LowQ} corresponding to the frequency f1 may not be equal to a threshold Thresh_{f2,LowQ} corresponding to the frequency f2. Thresh_{X,LowP} and Thresh_{X,LowQ} may be obtained by the terminal device 210 from the system information. For example, the intra-system inter-frequency threshold may be obtained from the SIB 4. In an example, the threshold may be carried in the inter-frequency carrier frequency information (Inter Freq Carrier Freq Info) field of the SIB 4. The inter-system threshold may be obtained from the SIB 5. In an example, the threshold may be carried in the inter-system carrier frequency (Carrier Freq EUTRA) field of the SIB 5.

1020: The terminal device 210 receives the system information from an access network device of the to-be-camped-on cell.

In some examples, the system information from the access network device of the to-be-camped-on cell may be the SIB 1 or the SIB 2, or may be another type of system information. This is not limited in this disclosure. The system information from the access network device of the to-be-camped-on cell may include whether the to-be-camped-on cell is barred (barred), whether the to-be-camped-on cell is reserved (reserved), an access class, and the like.

1030: The terminal device 210 may determine, based on the system information from the access network device of the to-be-camped-on cell, whether the to-be-camped-on cell can be normally camped on. If it is determined that the to-be-camped-on cell cannot be camped on, 1050 is performed; otherwise, 1040 is performed.

Specifically, if it is determined that the to-be-camped-on cell can be normally camped on, 1040 is performed; otherwise, 1050 is performed. For example, if the system information from the access network device of the to-be-camped-on cell indicates that the to-be-camped-on cell is not barred and not reserved, it may be determined that the to-be-camped-on cell can be normally camped on.

Specifically, if it is determined that the to-be-camped-on cell cannot be normally camped on (that is, cannot be camped on), 1050 is performed; otherwise, 1040 is performed. For example, if the system information from the access network device of the to-be-camped-on cell includes an indication indicating that "the to-be-camped-on cell is barred" or "the to-be-camped-on cell is reserved", it may be determined that the to-be-camped-on cell cannot be camped on.

1040: The terminal device 210 reselects the to-be-camped-on cell, to complete cell reselection.

1050: The terminal device 210 reselects a to-be-camped-on cell. After that, determining may be re-performed from 1010 until cell reselection is completed.

For example, a process of reselecting a to-be-camped-on cell in 1050 may include: deleting a to-be-camped-on cell that does not meet the reselection condition from a candidate cell, and re-performing 410. Alternatively, it may be understood that, a to-be-camped-on cell that does not meet the reselection condition is deleted from a neighboring cell, so that the cell that cannot be camped on is no longer used as the neighboring cell. Then, a to-be-camped-on cell is selected from an updated neighboring cell. The process of reselecting a to-be-camped-on cell is similar to that in 410. Therefore, details are not described in this disclosure again.

In this way, the terminal device 210 can select the to-be-camped-on cell based on the target network slice, and can complete cell reselection based on the reselection condition. This can ensure that a reselected cell can meet a service requirement of the terminal device 210, reduce an access latency, and improve service experience of the terminal device.

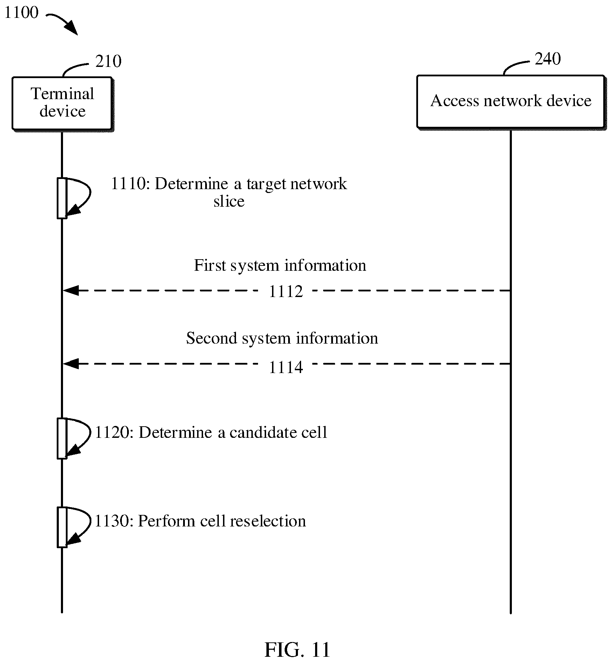

FIG. 11 is a schematic interaction diagram of a cell reselection method 1100 according to an embodiment of this disclosure. FIG. 11 relates to a terminal device 210 and an access network device 240. The access network device 240 may be an access network device of a serving cell in which the terminal device 210 is located. For example, the access network device 240 may be an access network device served by the terminal device 210.

The signaling interaction diagram shown in FIG. 11 is an overview, and a shown communication process is merely an example rather than a limitation. In embodiments of this disclosure, interacted signaling that is not shown in FIG. 11 may be included, or some signaling shown in FIG. 11 is omitted.

The method 1100 includes the following step. 1110: The terminal device 210 determines a target network slice.

For example, the target network slice may be determined by using an identifier, of a network slice, sent by a NAS stratum of the terminal device 210 to an AS stratum. For a specific implementation of 1110, refer to the related descriptions of 310 in FIG. 3. For brevity, details are not repeated herein again.

The method 1100 includes the following step. 1120: The terminal device 210 may determine at least one candidate cell based on the target network slice, where a frequency corresponding to the candidate cell supports the target network slice.

For example, the terminal device 210 may determine the at least one candidate cell based on system information from the access network device 240. For example, the system information may include first system information and second system information.

Specifically, the access network device 240 may send the system information, so that the terminal device 210 can receive the system information. The system information may be periodically or aperiodically sent by the access network device 240 in a broadcast form.

Refer to FIG. 11. 1112: The access network device 240 sends the first system information, so that the terminal device 210 can receive the first system information. 1114: The access network device 240 sends the second system information, so that the terminal device 210 can receive the second system information.

In some embodiments, the terminal device 210 may obtain a serving frequency of a serving cell in advance, and it is assumed that the serving frequency is f1. For example, the terminal device 210 may receive another piece of system information of the access network device 240, and learn of the serving frequency from the another piece of system information. The "another piece of system information" herein may be sent before the first system information, or may have a sending interval shorter than that of the first system information. For example, the "another piece of system information" may be a master information block (Master Information Block, MIB) or a system information block 1 (System Information Block 1, SIB 1). This is not limited in this disclosure.

The first system information may include a first priority, which is represented as P1, to indicate that a priority of f1 is P1. It should be noted that, although P1 is referred to as the first priority in this disclosure, "first" is not a limitation on the priority, but is merely used to differentiate between different priorities.

Optionally, in some other embodiments, the first system information may further include a network slice supported by a frequency (namely, a serving frequency) corresponding to a serving cell and/or a first priority of the network slice supported by the frequency corresponding to the serving cell.

Optionally, in some examples, the first system information may further include the network slice supported by the frequency (namely, the serving frequency) corresponding to the serving cell, for example, an identifier of the network slice. In an example, the system information may indicate, by using "{S1, S2}", that network slices supported by a serving cell 220 are S1 and S2.

Optionally, in some examples, the first system information may further include the first priority of the network slice supported by the frequency (namely, the serving frequency) corresponding to the serving cell. For example, a correspondence between an order of first priorities in the system information and the network slice may be predefined. For example, it is assumed that for three different network slices S 1, S2, and S3, three first priorities carried in three fields in the system information correspond to S 1, S2, and S3. This manner may indirectly include the network slice supported by the frequency corresponding to the serving cell. In an example, the system information may indicate, by using "P1x, P1, NULL (null)", that the first priorities of the network slices supported by the frequency corresponding to the serving cell are respectively P1x, P1, and null, and indirectly include that the network slices supported by the frequency corresponding to the serving cell are S1 and S2.

Optionally, in some examples, the first system information may further include the network slice (for example, the identifier) supported by the frequency corresponding to the serving cell and the first priority of the network slice supported by the frequency corresponding to the serving cell. In an example, the system information may indicate, by using "{S1, P1x}, {S2, P1}", that the network slices supported by the frequency corresponding to the serving cell are S1 and S2, the first priority of S 1 supported by the frequency corresponding to the serving cell is P1x, and the first priority of S2 supported by the frequency corresponding to the serving cell is P1.

Optionally, the first system information may further include a second priority of a network slice supported by a frequency corresponding to a neighboring cell.

The second system information may include the network slice supported by the frequency corresponding to the neighboring cell and/or the second priority of the network slice supported by the frequency corresponding to the neighboring cell.

Optionally, in some examples, the second system information includes the network slice supported by the frequency corresponding to the neighboring cell, and indication information corresponding to the network slice supported by the frequency corresponding to the neighboring cell, where the indication information indicates whether the serving cell supports the network slice supported by the frequency corresponding to the neighboring cell.

In some examples, the indication information may have a preset length, for example, one or more bits. One bit (1 bit) is used as an example. The indication information being a first value may indicate that the serving cell supports a corresponding network slice. The indication information being a second value indicates that the serving cell does not support a corresponding network slice. In an example, the first value is 1, and the second value is 0. In another example, the first value is 0, and the second value is 1. It may be understood that, slice information of the serving cell may alternatively be indicated in another manner, which is not listed in this disclosure.

It is assumed that the indication information being 1 indicates that the serving cell supports the network slice, and the indication information being 0 indicates that the serving cell does not support the network slice. In an example, the system information may indicate, by using "{S1, 1}, {S2, 1}", that network slices supported by a frequency corresponding to a neighboring cell 230-1 are S1 and S2, the serving cell 220 supports the network slice S1, and the serving cell 220 also supports the network slice S2.

Optionally, in some examples, the second system information includes the second priority of the network slice supported by the frequency corresponding to the neighboring cell, and indication information corresponding to the network slice supported by the frequency corresponding to the neighboring cell, where the indication information indicates whether the serving cell supports the network slice supported by the frequency corresponding to the neighboring cell. For example, a correspondence between an order of second priorities in the system information and the network slice may be predefined. For example, it is assumed that for three different network slices S 1, S2, and S3, three second priorities carried in three fields in the system information correspond to S1, S2, and S3. It is assumed that the indication information being 1 indicates that the serving cell supports the network slice, and the indication information being 0 indicates that the serving cell does not support the network slice. In an example, the system information may indicate, by using "{P21, 1}, {P22, 1}, {NULL, NULL}", that a second priority of the network slice S1 supported by the frequency corresponding to the neighboring cell 230-1 is P21, a second priority of the network slice S2 supported by the frequency corresponding to the neighboring cell 230-1 is P22, the serving cell 220 supports the network slice S1, and the serving cell 220 also supports the network slice S2.

Optionally, in some examples, the second system information includes the network slice supported by the frequency corresponding to the neighboring cell, the second priority of the network slice supported by the frequency corresponding to the neighboring cell, and indication information corresponding to the network slice supported by the frequency corresponding to the neighboring cell, where the indication information indicates whether the serving cell supports the network slice supported by the frequency corresponding to the neighboring cell. It is assumed that the indication information being 1 indicates that the serving cell supports the network slice, and the indication information being 0 indicates that the serving cell does not support the network slice. In an example, the system information may indicate, by using "{S1, P21, 1}, { S2, P22, 1}", that the frequency corresponding to the neighboring cell 230-1 supports the network slices S1 and S2, a second priority of the network slice S 1 supported by the frequency corresponding to the neighboring cell 230-1 is P21, a second priority of the network slice S2 supported by the frequency corresponding to the neighboring cell 230-1 is P22, the serving cell 220 supports the network slice S1, and the serving cell 220 also supports the network slice S2.

Optionally, the second system information may further include the first priority of the network slice supported by the frequency corresponding to the serving cell.

For the first system information and the second system information, refer to the system information described above with reference to FIG. 3. For brevity, details are not repeated herein again.

For example, an information element structure of the slice information (including the frequency, the network slice, and the priority) is not limited in this embodiment of this disclosure. For example, the slice may be used as an index, or the frequency may be used as an index.

The second system information is used as an example. In an implementation, that the slice is an index may be used as an example, as shown in Table 1. In the example of Table 1, slice information of the neighboring cell is shown in a form of a slice list, and includes a slice identifier and a frequency list, and further includes a frequency identifier and a frequency priority in the frequency list. In other words, the slice information may be shown in a slice dimension. It may be understood that, Table 1 is merely an example, and does not constitute a limitation on this embodiment of this disclosure. For example, the priority may be a cell reselection priority (cell Reselection Priority). Optionally, a sub-priority, for example, a cell reselection sub-priority (cell Reselection Sub-Priority), may be further included.

**Table 1**

| |
|---|
| >Slice list |
| >>Slice identifier |
| >>Frequency list |
| >>>Frequency identifier |
| >>>Priority |

The second system information is used as an example. In another implementation, that the frequency is an index may be used as an example, as shown in Table 2. In the example of Table 2, slice information of the neighboring cell is shown in a form of a frequency list, and includes a frequency identifier and a slice list, and further includes a slice identifier and a slice priority in the slice list. In other words, the slice information may be shown in a frequency dimension. It may be understood that, Table 2 is merely an example, and does not constitute a limitation on this embodiment of this disclosure. For example, the priority may be a cell reselection priority (cell Reselection Priority). Optionally, a sub-priority, for example, a cell reselection sub-priority (cell Reselection Sub-Priority), may be further included.

**Table 2**

| |
|---|
| >Frequency list |
| >>Frequency identifier |
| >>Slice list |
| >>>Slice identifier |
| >>>Priority |

It should be understood that, the neighboring cell may be an intra-system inter-frequency cell or an inter-system cell. Same frequencies in a same system may have a same priority. Different frequencies in a same system may have different priorities. Same or different frequencies in different systems may have same or different priorities.

For example, the first system information may be a SIB 2, and the second system information may be a SIB 4 and/or a SIB 5. For example, the SIB 4 includes slice information of a first-type neighboring cell (for example, an intra-system inter-frequency neighboring cell), and the SIB 5 includes slice information of a second-type neighboring cell (for example, an inter-system neighboring cell). However, this is not limited in this disclosure.

In some embodiments, the first system information may be one or more of the SIB 2, the SIB 4, the SIB 5, or a newly defined SIB, and the second system information may be one or more of the SIB 2, the SIB 4, the SIB 5, or a newly defined SIB. In some other embodiments, the first system information and the second system information may be combined into one piece of system information. In this case, 1112 and 1114 in FIG. 11 become one step, and the system information may be one or more of the SIB 2, the SIB 4, the SIB 5, or the newly defined SIB.

In addition, it should be noted that, although a process of sending the first system information in 1112 shown in FIG. 11 is after 1110, this is not limited in this disclosure. For example, 1112 may be performed before 1110, or may be optionally performed in parallel with 1110. Similarly, 1114 may be performed before or after 1110 or in parallel with 1110.

The method 1100 includes the following step. 1120: The terminal device 210 may determine the at least one candidate cell based on the system information.

In some examples, the at least one candidate cell may be determined based on the second system information.

For example, if the second system information indicates that a frequency supports the target network slice, all neighboring cells deployed on the frequency may be used as candidate cells, that is, all neighboring cells deployed on the frequency are candidate cells. For example, if a first frequency supports the target network slice, all cells deployed on the first frequency are candidate cells. If a second frequency does not support the target network slice, none of cells deployed on the second frequency is a candidate cell.

In this manner, a frequency corresponding to the candidate cell determined in 1120 supports the target network slice. It may be understood that, there may be one or more candidate cells determined in 1120.

The method 1100 includes the following step. 1130: The terminal device 210 may perform cell reselection based on the at least one candidate cell.

Specifically, the terminal device 210 may select a to-be-camped-on cell based on the at least one candidate cell, and then complete cell reselection based on the to-be-camped-on cell. For example, the terminal device 210 may select the to-be-camped-on cell based on the at least one candidate cell, determine whether the to-be-camped-on cell meets a reselection condition, and reselect the to-be-camped-on cell when the to-be-camped-on cell meets the reselection condition.

In an implementation, the terminal device 210 may select the to-be-camped-on cell from the serving cell and the at least one candidate cell. In another implementation, the terminal device 210 may select the to-be-camped-on cell from the at least one candidate cell. In still another implementation, the terminal device 210 may select the to-be-camped-on cell from the serving cell and the neighboring cell, where the neighboring cell includes the at least one candidate cell.

It may be understood that, for a process of selecting the to-be-camped-on cell, refer to the foregoing descriptions of 410 in FIG. 4. For brevity, details are not repeated herein again.

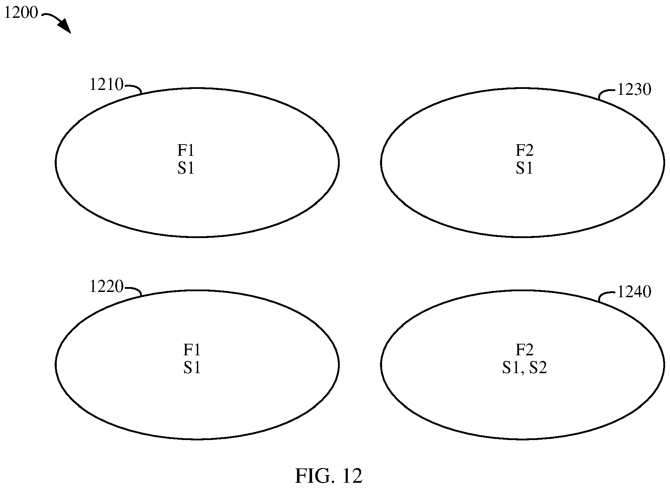

To more comprehensively describe a cell reselection process after the to-be-camped-on cell is selected, the following first describes, by using FIG. 12, two different cases to which embodiments of this disclosure may be applied.

Embodiments of this disclosure may be applied to two different cases: (1) Case 1: A network slice supported by a frequency is equivalent to a network slice supported by a cell deployed on the frequency. In other words, cells do not need to be differentiated for the network slice supported by the frequency, and this case is referred to as a cell non-differentiated case for short. This case may also be referred to as that the slice and the frequency have a binding relationship. In other words, for cells, only a network slice supported by a corresponding frequency needs to be determined, and the cells do not need to be differentiated. In this case, if frequencies of two different cells are the same, network slices supported by the two different cells are also the same, and may be uniformly represented as a network slice supported by the frequency. (2) Case 2: A network slice supported by a frequency is not necessarily equivalent to a network slice supported by a cell deployed on the frequency. In other words, cells need to be differentiated for the network slice supported by the frequency, and this case is referred to as a cell differentiated case for short. This case may also be referred to as that the slice does not have a binding relationship with the frequency. In other words, for a cell, a frequency corresponding to the cell may support more network slices than the cell. That is, cells need to be differentiated. In this case, even if frequencies of two different cells are the same, network slices supported by the two different cells may be different. Refer to FIG. 12. The two different cases are schematically described.

FIG. 12 is a schematic diagram of a slice deployment case 1200 according to an embodiment of this disclosure. FIG. 12 includes four different cells, which are respectively a cell 1210, a cell 1220, a cell 1230, and a cell 1240.

In FIG. 12, a frequency F1 supports a network slice S1, and the cells are not differentiated. As shown in the figure, frequencies corresponding to the cell 1210 and the cell 1220 are both F1, a network slice supported by the cell 1210 is S1, and a network slice supported by the cell 1220 is also S1. When the cells are not differentiated, for such a cell (for example, the cell 1210 or the cell 1220), the slice supported by the cell is equivalent to the slice supported by the frequency corresponding to the cell.

In FIG. 12, a frequency F2 supports a network slice S 1 and a network slice S2, and the cells are differentiated. As shown in the figure, frequencies corresponding to the cell 1230 and the cell 1240 are both F2. However, a network slice supported by the cell 1230 is S1, and network slices supported by the cell 1240 are S1 and S2. It can be learned that, when the cells are differentiated, for such a cell (for example, the cell 1230 or the cell 1240), the slice supported by the cell cannot be equivalent to the slice supported by the frequency corresponding to the cell.

It should be understood that, FIG. 12 is merely an example, and should not be construed as a limitation on embodiments of this disclosure. For ease of description, in the following, Case 1 is briefly referred to as a cell non-differentiated case, and Case 2 is briefly referred to as a cell differentiated case.

It may be understood that, for Case 1 in which cells are not differentiated, a candidate cell supports a target network slice, and correspondingly, the to-be-camped-on cell selected in 1130 also supports the target network slice. For Case 2 in which cells are differentiated, although a frequency corresponding to a candidate cell supports a target network slice, not all candidate cells support the target network slice, and correspondingly, the to-be-camped-on cell selected in 1130 does not necessarily support (may or may not support) the target network slice. Therefore, for different cases, after the to-be-camped-on cell is selected in 1130, cell reselection processes are not completely the same.

For Case 1 in which cells are not differentiated, after selecting the to-be-camped-on cell, for a process in which a terminal device 210 further performs cell reselection, refer to the foregoing descriptions in FIG. 10. For brevity, details are not repeated herein again.

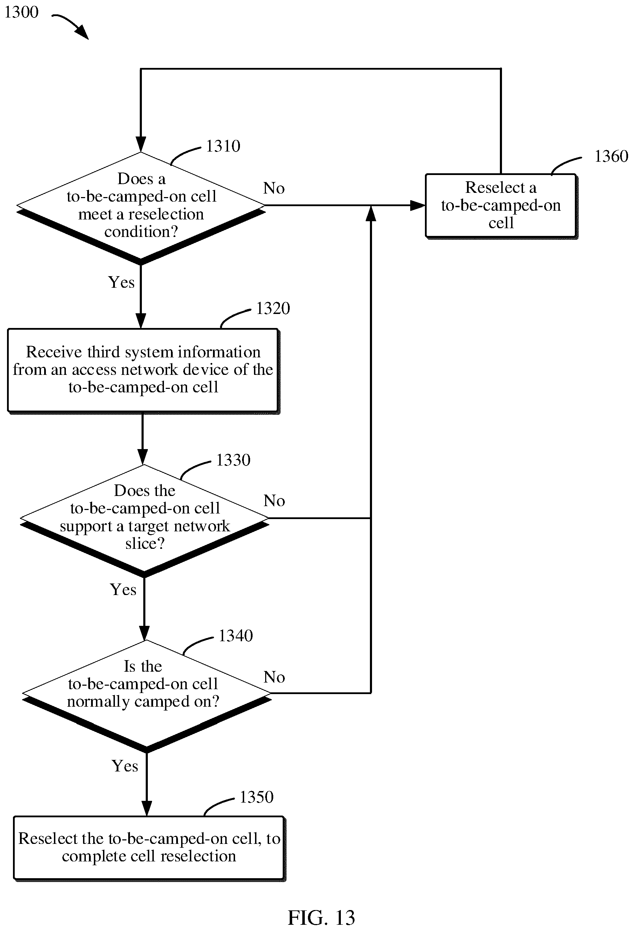

For Case 2 in which cells are differentiated, after selecting the to-be-camped-on cell, a process in which a terminal device 210 further performs cell reselection is described with reference to FIG. 13.

FIG. 13 is another schematic flowchart of a cell reselection method 1300 according to an embodiment of this disclosure. The process 1300 shown in FIG. 13 includes the following steps.

1310: A terminal device 210 may determine whether a to-be-camped-on cell meets a reselection condition; and if the to-be-camped-on cell meets the reselection condition, perform 1320; otherwise, perform 1360.

For example, the reselection condition is related to a second priority of a target network slice supported by a frequency corresponding to the to-be-camped-on cell. For the reselection condition and a specific implementation of 1310, refer to the related descriptions of 1010 in FIG. 10. For brevity, details are not repeated herein again.

1320: The terminal device 210 may receive third system information from an access network device of the to-be-camped-on cell. The third system information includes indication information indicating whether the to-be-camped-on cell supports the target network slice.

It may be understood that, the third system information in 1320 is from the access network device of the to-be-camped-on cell, and is different from the access network device 240 of the serving cell shown in FIG. 2. With reference to FIG. 2, if the selected to-be-camped-on cell is a neighboring cell 230-1, the third system information is from an access network device (not shown in the figure) of the neighboring cell 230-1. If the selected to-be-camped-on cell is a neighboring cell 230-2, the third system information is from an access network device (not shown in the figure) of the neighboring cell 230-2.

In some examples, the third system information may be a SIB 1 or a SIB 2, or may be other system information. This is not limited in this disclosure.

1330: The terminal device 210 determines, based on the third system information, whether the to-be-camped-on cell supports the target network slice; and if the to-be-camped-on cell supports the target network slice, perform 1340; otherwise, perform 1360.

For example, the third system information may include an identifier of a network slice supported by the to-be-camped-on cell, so that the terminal device 210 can learn whether the to-be-camped-on cell supports the target network slice.

1340: The terminal device 210 may determine, based on the third system information, whether the to-be-camped-on cell can be normally camped on. If it is determined that the to-be-camped cell cannot be camped on, 1360 is performed; otherwise, 1350 is performed.

For example, the third system information may further include whether the to-be-camped-on cell is barred (barred), whether the to-be-camped-on cell is reserved (reserved), and an access class.

Specifically, if it is determined that the to-be-camped-on cell can be normally camped on, 1350 is performed; otherwise, 1360 is performed. For example, if the third system information indicates that the to-be-camped-on cell is not barred and not reserved, it may be determined that the to-be-camped-on cell can be normally camped on.

Specifically, if it is determined that the to-be-camped-on cell cannot be normally camped on (that is, cannot be camped on), 1360 is performed; otherwise, 1350 is performed. For example, if the third system information includes an indication indicating that "the to-be-camped-on cell is barred" or "the to-be-camped-on cell is reserved", it may be determined that the to-be-camped-on cell cannot be camped on.

1350: The terminal device 210 may reselect the to-be-camped-on cell, to complete cell reselection.

1360: The terminal device 210 may reselect a to-be-camped-on cell. After that, determining may be re-performed from 1310 until cell reselection is completed.

For example, a process of reselecting a to-be-camped-on cell in 1360 may include: deleting a to-be-camped-on cell that does not meet the reselection condition from a candidate cell, and re-performing 1130. Alternatively, it may be understood that, a to-be-camped-on cell that does not meet the reselection condition is deleted from a neighboring cell, so that the cell that cannot be camped on is no longer used as the neighboring cell. Then, a to-be-camped-on cell is selected from an updated neighboring cell. The process of reselecting a to-be-camped-on cell is similar to that in 1130. Therefore, details are not described in this disclosure again.

In this way, the third system information may include the indication information indicating whether the network slice is supported, so that the terminal device 210 cannot camp on a candidate cell that does not support the target network slice. In this way, it is ensured that a service after camping can be normally running, thereby reducing an access latency and improving service experience of the terminal device.

According to this embodiment of this disclosure, the terminal device determines the candidate cell based on the target network slice, and selects the to-be-camped-on cell from the candidate cell whose corresponding frequency supports the target network slice, instead of directly using all neighboring cells as candidate cells. In one aspect, a range of the candidate cell can be narrowed down, so that the to-be-camped-on cell is determined more efficiently. In another aspect, because a frequency corresponding to the candidate cell supports the target network slice, the to-be-camped-on cell determined in the cell reselection process supports the target network slice. Therefore, a service requirement of the terminal device can be met, an access latency is reduced, and service experience is improved.

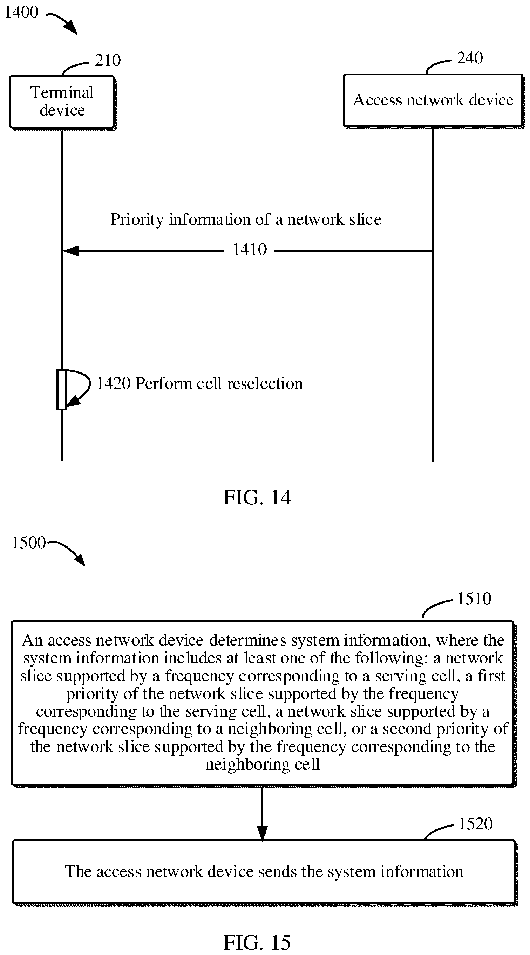

FIG. 14 is another schematic interaction diagram of a cell reselection method 1400 according to an embodiment of this disclosure. FIG. 14 relates to a terminal device 210 and an access network device 240. The access network device 240 is an access network device of a serving cell in which the terminal device 210 is currently located. The method 1400 in FIG. 14 includes 1410 and 1420.

In 1410, the terminal device 210 obtains priority information of a network slice. For example, the access network device 240 may send, to the terminal device 210, priority information of a network slice supported by a frequency corresponding to a neighboring cell.

Specifically, the terminal device 210 may obtain the priority information of the network slice supported by the frequency corresponding to the neighboring cell. It may be understood that, there may be more than one network slice supported by the frequency corresponding to the neighboring cell. Correspondingly, priority information of one or more network slices supported by the frequency corresponding to the neighboring cell may be obtained.

In some embodiments, the terminal device 210 may receive system information from the access network device 240, where the system information includes the priority information (for example, a second priority) of the network slice supported by the frequency corresponding to the neighboring cell.

In an implementation, the system information may include the network slice (for example, an identifier) supported by the frequency corresponding to the neighboring cell and the second priority of the network slice supported by the frequency corresponding to the neighboring cell.

In another implementation, the system information includes the network slice supported by the frequency corresponding to the neighboring cell, the second priority of the network slice supported by the frequency corresponding to the neighboring cell, and indication information corresponding to the network slice supported by the frequency corresponding to the neighboring cell, where the indication information indicates whether the serving cell supports the network slice supported by the frequency corresponding to the neighboring cell. The system information further includes a first priority of a frequency corresponding to the serving cell. Optionally, in this embodiment, a network slice supported by the frequency corresponding to the serving cell has the first priority.

Optionally, the system information may further include the network slice supported by the frequency corresponding to the serving cell and/or the first priority of the network slice supported by the frequency corresponding to the serving cell.

For example, the system information may include first system information and second system information. It may be understood that, the first system information and the second system information may be carried in a same message for sending, or may be carried in different messages for sending. It may be understood that, the first system information and the second system information may be sent to the terminal device 210 simultaneously or not simultaneously.

In some embodiments, the first system information may include priority information, for example, the first priority, of the frequency corresponding to the serving cell. The second system information may include the identifier of the network slice supported by the frequency corresponding to the neighboring cell, the second priority of the network slice supported by the frequency corresponding to the neighboring cell, and the indication information corresponding to the network slice supported by the frequency corresponding to the neighboring cell, where the indication information indicates whether the serving cell supports the "network slice supported by the frequency corresponding to the neighboring cell".

In some other embodiments, the first system information may include an identifier of the network slice supported by the frequency corresponding to the serving cell and the first priority of the network slice supported by the frequency corresponding to the serving cell. The second system information may include the identifier of the network slice supported by the frequency corresponding to the neighboring cell and the second priority of the network slice supported by the frequency corresponding to the neighboring cell.

In an example, the first system information may include a SIB 1 and/or a SIB 2. In an example, the second system information may include a SIB 4 and/or a SIB 5.

In this embodiment of this disclosure, the frequency corresponding to the neighboring cell may include an intra-system inter-frequency and/or an inter-system frequency. For example, if the serving cell belongs to an NR system, the intra-system inter-frequency may be a different frequency (different NR frequency) of the NR system, and the inter-system frequency may be an inter-RAT frequency (inter-RAT frequency).

In some other embodiments, in 1410, the terminal device 210 may obtain the corresponding priority information based on a target network slice. For example, the terminal device 210 may determine, as the target network slice a network slice corresponding to a to-be-initiated service, and determine, based on the target network slice, a frequency that supports the target network slice. For example, the terminal device 210 may determine a frequency that can be used to access the target network slice, or may determine a frequency on which the target network slice is deployed. Further, the terminal device 210 may obtain a priority of the target network slice for the frequency.

It may be understood that, for the system information, refer to the related descriptions in the foregoing embodiments in FIG. 3 to FIG. 13. To avoid repetition, details are not described herein again.

In 1420, the terminal device 210 performs cell reselection based on the priority information of the network slice. For example, the terminal device 210 may perform cell reselection based on the obtained priority information of the network slice supported by the frequency corresponding to the neighboring cell.

Specifically, when needing to initiate a service, the terminal device 210 may perform cell reselection. The to-be-initiated service may correspond to the target network slice. It may be understood that, because different network slices can meet different service requirements, when services that need to be initiated are different, corresponding network slices may be different. In this embodiment of this disclosure, a network slice corresponding to a to-be-initiated service is a target network slice, or may be referred to as an intended slice. Correspondingly, the service may be referred to as a slice service, slice communication, or the like.

In an implementation, the terminal device 210 may perform cell reselection based on a second priority of a target network slice supported by a frequency corresponding to a candidate cell in the neighboring cell, where the frequency corresponding to the candidate cell supports the target network slice. In other words, for the neighboring cell, only a neighboring cell frequency that supports the target network slice may be considered, and a neighboring cell frequency that does not support the target network slice is not considered.

In some embodiments, if the serving cell supports the target network slice, the terminal device 210 may perform cell reselection based on a first priority of the target network slice supported by the frequency corresponding to the serving cell and the second priority of the target network slice supported by the frequency corresponding to the candidate cell. In other words, during cell reselection, only the neighboring cell frequency that supports the target network slice and the frequency (namely, the serving frequency) corresponding to the serving cell may be considered, and the neighboring cell frequency that does not support the target network slice is not considered.

In this embodiment, a to-be-camped-on cell may be selected from the serving cell and the candidate cell based on the first priority of the target network slice supported by the frequency corresponding to the serving cell and the second priority of the target network slice supported by the frequency corresponding to the candidate cell, and the to-be-camped-on cell is reselected when the to-be-camped-on cell meets a reselection condition.

In some other embodiments, if the serving cell does not support the target network slice, the terminal device may perform cell reselection based on the second priority of the target network slice supported by the frequency corresponding to the candidate cell. In other words, during cell reselection, only the neighboring cell frequency that supports the target network slice may be considered, and the neighboring cell frequency that does not support the target network slice is not considered.

In this embodiment, a to-be-camped-on cell may be selected from the candidate cell based on the second priority of the target network slice supported by the frequency corresponding to the candidate cell, and the to-be-camped-on cell is reselected when the to-be-camped-on cell meets a reselection condition.

In another implementation, the terminal device 210 may perform cell reselection based on a first priority of a target network slice supported by the frequency corresponding to the serving cell, a second priority of a target network slice supported by a frequency corresponding to a candidate cell in the neighboring cell, and a second priority of a target network slice supported by a frequency corresponding to a non-candidate cell other than the candidate cell in the neighboring cell.

In this implementation, the neighboring cell includes the candidate cell and the non-candidate cell, where the frequency corresponding to the candidate cell supports the target network slice, and the frequency corresponding to the non-candidate cell does not support the target network slice. In 1410, the second priority of the target network slice supported by the frequency corresponding to the candidate cell can be obtained. However, because the frequency corresponding to the non-candidate cell does not support the target network slice, the second priority of the target network slice supported by the frequency corresponding to the non-candidate cell cannot be obtained. Optionally, the terminal device 210 may set, to a second preset value, the second priority of the target network slice supported by the frequency corresponding to the non-candidate cell, where the second preset value is lower than the second priority of the target network slice supported by the frequency corresponding to the candidate cell.

It may be understood that, if there are a plurality of frequencies corresponding to the non-candidate cell, frequencies corresponding to different non-candidate cells may have the same or different second preset values, provided that the second preset value is lower than a second priority of a target network slice supported by a frequency corresponding to each candidate cell.

In this implementation, if the serving cell supports the target network slice, the first priority of the target network slice supported by the frequency corresponding to the serving cell may be obtained from the system information. On the contrary, if the serving cell does not support the target network slice, the first priority of the target network slice supported by the frequency corresponding to the serving cell cannot be obtained from the system information. Optionally, the terminal device 210 may set, to a first preset value, the first priority of the target network slice supported by the frequency corresponding to the serving cell, where the first preset value is lower than the second priority of the target network slice supported by the frequency corresponding to the candidate cell.

For example, in the example in FIG. 8, if the serving cell 220 does not support the target network slice S2, the first priority of the target network slice supported by the frequency corresponding to the serving cell may be set to the first preset value. For example, if the first preset value is 0, "f1: {S2, P1=0}" may be used to set, to P1, the first priority of the target network slice supported by the frequency corresponding to the serving cell.

It may be understood that, the first preset value and the second preset value may be equal or unequal. This is not limited in this disclosure.

In the embodiment in FIG. 14, for a process of performing cell reselection based on the first priority and the second priority, refer to the related descriptions in FIG. 3 to FIG. 13. For brevity, details are not described herein again.

In this embodiment of this disclosure, after the to-be-camped-on cell is selected based on the second priority of the target network slice supported by the frequency corresponding to the neighboring cell, cell reselection may be further performed based on the reselection condition. For example, for the process, refer to the foregoing embodiment in FIG. 10 or FIG. 13. For brevity, details are not described herein again.

FIG. 15 is a schematic flowchart of an information transmission method 1500 according to an embodiment of this disclosure. The method 300 may be performed by an access network device, for example, the access network device 240 in FIG. 2. The method 1500 shown in FIG. 15 may include steps 1510 and 1520.

1510: The access network device determines system information, where the system information includes at least one of the following: a network slice supported by a frequency corresponding to a serving cell, a first priority of the network slice supported by the frequency corresponding to the serving cell, a network slice supported by a frequency corresponding to a neighboring cell, or a second priority of the network slice supported by the frequency corresponding to the neighboring cell.

1520: The access network device sends the system information.

For example, the system information may include first system information and second system information. The first system information includes the network slice supported by the frequency corresponding to the serving cell and/or the first priority of the network slice supported by the frequency corresponding to the serving cell. The second system information includes the network slice supported by the frequency corresponding to the neighboring cell and/or the second priority of the network slice supported by the frequency corresponding to the neighboring cell.

In some embodiments, the system information may include the first priority of the network slice supported by the frequency corresponding to the serving cell, the network slice supported by the frequency corresponding to the neighboring cell, and the second priority of the network slice supported by the frequency corresponding to the neighboring cell.

In some other embodiments, the system information may include the first priority of the frequency corresponding to the serving cell, the network slice supported by the frequency corresponding to the neighboring cell, and the second priority of the network slice supported by the frequency corresponding to the neighboring cell. Optionally, the system information further includes indication information corresponding to the network slice supported by the frequency corresponding to the neighboring cell, and the indication information indicates whether the serving cell supports the network slice supported by the frequency corresponding to the neighboring cell.

For example, the system information includes the network slice, and may include an identifier of the network slice. The identifier of the network slice includes at least one of the following: S-NSSAI, a slice ID, a slice group ID, an access category, or an access identity.

For example, in 1520, the access network device may send the system information to a terminal device in a broadcast form.

The information transmission method 1500 in FIG. 15 relates to system information transmission, and the system information may be used in a cell reselection process of the terminal device. It may be understood that, for related descriptions of the system information, the first system information, the second system information, and the like, refer to the foregoing embodiment in FIG. 3. For brevity, details are not repeated herein again.

According to this embodiment of this disclosure, the terminal device performs cell reselection based on priority information of the network slice supported by the frequency corresponding to the neighboring cell, and fully considers different priorities of different network slices. Therefore, it can be ensured that a reselected cell meets a service requirement of the terminal device, to reduce an access latency and improve service experience.

It should be understood that, in embodiments of this disclosure, "first", "second", "third", and the like are merely intended to indicate that a plurality of objects may be different, but two objects may be the same. "First", "second", "third", and the like should not be construed as any limitation on embodiments of this disclosure.

It should be further understood that, division of manners, cases, categories, and embodiments in embodiments of this disclosure is merely for ease of description, and should not constitute a special limitation. Features in the manners, categories, cases, and embodiments may be combined with each other provided that the features are logical.

It should be further understood that, the foregoing content is merely intended to help a person skilled in the art better understand embodiments of this disclosure, but is not intended to limit the scope of embodiments of this disclosure. A person skilled in the art may make various modifications, variations, combinations, or the like based on the foregoing content. A solution obtained after such a modification, change, or combination also falls within the scope of embodiments of this disclosure.

It should be further understood that, the foregoing content description focuses on differences between embodiments. For same or similar parts, refer to each other. For brevity, details are not described herein again.

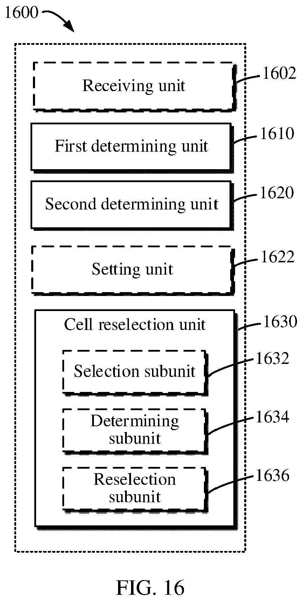

FIG. 16 is a schematic block diagram of a communication apparatus 1600 according to an embodiment of this disclosure. The apparatus 1600 may be implemented in a terminal device 210, or may be implemented as a chip or a chip system in the terminal device 210. The scope of this disclosure is not limited in this aspect.

As shown in FIG. 16, the apparatus 1600 may include a first determining unit 1610, a second determining unit 1620, and a cell reselection unit 1630. The first determining unit 1610 may be configured to determine a target network slice. The second determining unit 1620 may be configured to determine at least one candidate cell based on the target network slice, where a frequency corresponding to the candidate cell supports the target network slice. The reselection unit 1630 may be configured to perform cell reselection based on the at least one candidate cell.

In some embodiments, the apparatus 1600 may further include a receiving unit 1602.

In some embodiments, the receiving unit 1602 may be configured to receive first system information from an access network device of a serving cell in which the communication apparatus 1600 is located, where the first system information includes a network slice supported by a frequency corresponding to the serving cell and/or a first priority of the network slice supported by the frequency corresponding to the serving cell.

Optionally, the first system information further includes a second priority of a network slice supported by a frequency corresponding to a neighboring cell.

In some embodiments, the receiving unit 1602 may be configured to: receive second system information from an access network device of a serving cell in which the communication apparatus 1600 is located, where the second system information includes a network slice supported by a frequency corresponding to a neighboring cell and/or a second priority of the network slice supported by the frequency corresponding to the neighboring cell, the second system information further includes indication information corresponding to the network slice supported by the frequency corresponding to the neighboring cell, and the indication information indicates whether the serving cell supports the network slice supported by the frequency corresponding to the neighboring cell.

Optionally, the second system information further includes a first priority of a network slice supported by a frequency corresponding to the serving cell.

In some embodiments, the second determining unit 1620 may be configured to determine the at least one candidate cell in the neighboring cell based on the target network slice and the network slice supported by the frequency corresponding to the neighboring cell.

Optionally, if the network slice supported by the frequency corresponding to the neighboring cell includes the target network slice, the neighboring cell is a candidate cell.

In some embodiments, the cell reselection unit 1630 may include: a selection subunit 1632, configured to select a to-be-camped-on cell based on the at least one candidate cell; a determining subunit 1634, configured to determine whether the to-be-camped-on cell meets a reselection condition; and a reselection subunit 1636, configured to reselect the to-be-camped-on cell when the to-be-camped-on cell meets the reselection condition.

In some embodiments, the selection subunit 1632 may be configured to: when the serving cell supports the target network slice, select the to-be-camped-on cell from the serving cell and the at least one candidate cell.

In some embodiments, the selection subunit 1632 is configured to: when the serving cell does not support the target network slice, select the to-be-camped-on cell from the at least one candidate cell.

In some embodiments, the selection subunit 1632 may be configured to select the to-be-camped-on cell from a serving cell and a neighboring cell based on at least one of the following: a first priority of the target network slice on a frequency corresponding to the serving cell, a second priority of the target network slice supported by the frequency corresponding to the candidate cell, or a second priority of the target network slice on a frequency corresponding to a non-candidate cell other than the at least one candidate cell in the neighboring cell.

In some embodiments, the apparatus may further include a setting unit 1622, configured to: when the serving cell does not support the target network slice, set, to a first preset value, the first priority of the target network slice on the frequency corresponding to the serving cell, where the first preset value is lower than the second priority of the target network slice supported by the frequency corresponding to the candidate cell.

In some embodiments, the setting unit 1622 is configured to: for the non-candidate cell other than the at least one candidate cell in the neighboring cell, set, to a second preset value, the second priority of the target network slice on the frequency corresponding to the non-candidate cell, where the second preset value is lower than the second priority of the target network slice supported by the frequency corresponding to the candidate cell.

In some embodiments, the reselection subunit 1636 may be configured to: receive third system information from an access network device of the to-be-camped-on cell, where the third system information includes indication information indicating whether the to-be-camped-on cell supports the target network slice; and reselect the to-be-camped-on cell when the third system information indicates that the to-be-camped-on cell supports the target network slice.

In some embodiments, the network slice has an identifier, and the identifier includes at least one of the following: S-NSSAI, a slice ID, a slice group ID, an access category, or an access identity.

For example, the apparatus 1600 in FIG. 16 may be implemented as a terminal device 210, or may be implemented as a chip or a chip system in the terminal device 210. This is not limited in this embodiment of this disclosure. The apparatus 1600 in FIG. 16 can be configured to implement the processes described with reference to the terminal device 210 in FIG. 3 to FIG. 15. For brevity, details are not described herein again.

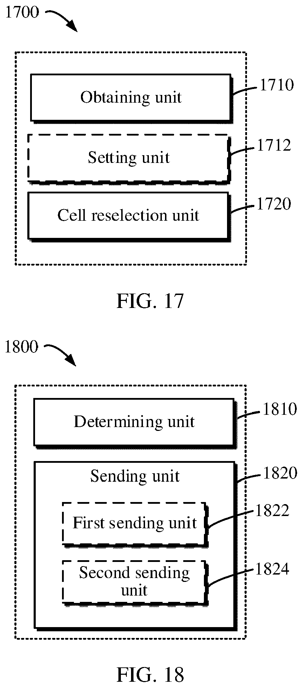

FIG. 17 is a schematic block diagram of a communication apparatus 1700 according to an embodiment of this disclosure. The apparatus 1700 may be implemented in a terminal device 210, or may be implemented as a chip or a chip system in the terminal device 210. The scope of this disclosure is not limited in this aspect.

As shown in FIG. 17, the apparatus 1700 may include an obtaining unit 1710 and a cell reselection unit 1720. The obtaining unit 1710 may be configured to obtain priority information of a network slice supported by a frequency corresponding to a neighboring cell. The cell reselection unit 1720 may be configured to perform cell reselection based on the priority information of the network slice supported by the frequency corresponding to the neighboring cell.

In some embodiments, the obtaining unit 1710 may be configured to receive system information from an access network device of a serving cell in which the communication apparatus 1700 is located, where the system information includes a second priority of the network slice supported by the frequency corresponding to the neighboring cell.

In some embodiments, the system information includes the second priority of the network slice supported by the frequency corresponding to the neighboring cell, and indication information corresponding to the network slice supported by the frequency corresponding to the neighboring cell, where the indication information indicates whether the serving cell supports the network slice supported by the frequency corresponding to the neighboring cell.

In some embodiments, the system information includes the network slice supported by the frequency corresponding to the neighboring cell, the second priority of the network slice supported by the frequency corresponding to the neighboring cell, and indication information corresponding to the network slice supported by the frequency corresponding to the neighboring cell, where the indication information indicates whether the serving cell supports the network slice supported by the frequency corresponding to the neighboring cell. The system information further includes a first priority of a frequency corresponding to the serving cell. Optionally, in this embodiment, a network slice supported by the frequency corresponding to the serving cell has the first priority.

In some other embodiments, the system information further includes the network slice supported by the frequency corresponding to the serving cell and the first priority of the network slice supported by the frequency corresponding to the serving cell.

In some embodiments, if the communication apparatus 1700 needs to initiate a service, and the service corresponds to a target network slice, the cell reselection unit 1720 may be configured to perform cell reselection based on a second priority of a target network slice supported by a frequency corresponding to a candidate cell in the neighboring cell, where the frequency corresponding to the candidate cell supports the target network slice.

In some embodiments, when the serving cell supports the target network slice, the cell reselection unit 1720 may be configured to: select a to-be-camped-on cell from the serving cell and the candidate cell based on a first priority of a target network slice supported by the frequency corresponding to the serving cell and the second priority of the target network slice supported by the frequency corresponding to the candidate cell; and reselect the to-be-camped-on cell when the to-be-camped-on cell meets a reselection condition.

In some embodiments, when the serving cell does not support the target network slice, the cell reselection unit 1720 may be configured to: select a to-be-camped-on cell from the candidate cell based on the second priority of the target network slice supported by the frequency corresponding to the candidate cell; and reselect the to-be-camped-on cell when the to-be-camped-on cell meets a reselection condition.

In some embodiments, the cell reselection unit 1720 is configured to select the to-be-camped-on cell from a serving cell and a neighboring cell based on at least one of the following: a first priority of the target network slice on a frequency corresponding to the serving cell, a second priority of the target network slice supported by the frequency corresponding to the candidate cell in the neighboring cell, or a second priority of the target network slice on a frequency corresponding to a non-candidate cell other than the candidate cell in the neighboring cell; and perform cell reselection.

In some embodiments, the apparatus further includes a setting unit 1712, configured to: when the serving cell does not support the target network slice, set, to a first preset value, the first priority of the target network slice on the frequency corresponding to the serving cell, where the first preset value is lower than the second priority of the target network slice supported by the frequency corresponding to the candidate cell.

In some embodiments, the setting unit 1712 is configured to: for the non-candidate cell other than the candidate cell in the neighboring cell, set, to a second preset value, the second priority of the target network slice on the frequency corresponding to the non-candidate cell, where the second preset value is lower than the second priority of the target network slice supported by the frequency corresponding to the candidate cell.

In some embodiments, the cell reselection unit 1720 may be configured to: receive third system information from an access network device of the to-be-camped-on cell, where the third system information includes indication information indicating whether the to-be-camped-on cell supports the target network slice; and reselect the to-be-camped-on cell when the third system information indicates that the to-be-camped-on cell supports the target network slice.

In some embodiments, the network slice has an identifier, and the identifier includes at least one of the following: S-NSSAI, a slice ID, a slice group ID, an access category, or an access identity.

For example, the apparatus 1700 in FIG. 17 may be implemented as a terminal device 210, or may be implemented as a chip or a chip system in the terminal device 210. This is not limited in this embodiment of this disclosure. The apparatus 1700 in FIG. 17 can be configured to implement the processes described with reference to the terminal device 210 in FIG. 3 to FIG. 15. For brevity, details are not described herein again.

FIG. 18 is a schematic block diagram of a communication apparatus 1800 according to an embodiment of this disclosure. The apparatus 1800 may be implemented in an access network device 240, or may be implemented as a chip or a chip system in the access network device 240. The scope of this disclosure is not limited in this aspect.

As shown in FIG. 18, the apparatus 1800 may include a determining unit 1810 and a sending unit 1820. The determining unit 1810 is configured to determine system information, and the sending unit 1820 is configured to send the system information. The system information includes at least one of the following: a network slice supported by a frequency corresponding to a serving cell, a first priority of the network slice supported by the frequency corresponding to the serving cell, a network slice supported by a frequency corresponding to a neighboring cell, or a second priority of the network slice supported by the frequency corresponding to the neighboring cell.

Optionally, the system information may include first system information and second system information. The first system information includes the network slice supported by the frequency corresponding to the serving cell and/or the first priority of the nwtwork slice supported by the frequency corresponding to the serving cell. The second system information includes the network slice supported by the frequency corresponding to the neighboring cell and/or the second priority of the network slice supported by the frequency corresponding to the neighboring cell.

Optionally, the sending unit 1820 may include a first sending unit 1822 and a second sending unit 1824. The first sending unit 1822 is configured to send the first system information, and the second sending unit 1824 is configured to send the second system information.

In some embodiments, the system information further includes indication information corresponding to the network slice supported by the frequency corresponding to the neighboring cell, and the indication information indicates whether the serving cell supports the network slice supported by the frequency corresponding to the neighboring cell.

In some embodiments, the network slice has an identifier, and the identifier includes at least one of the following: S-NSSAI, a slice ID, a slice group ID, an access category, or an access identity.

For example, the apparatus 1800 in FIG. 18 may be implemented as an access network device 240, or may be implemented as a chip or a chip system in the access network device 240. This is not limited in this embodiment of this disclosure. The apparatus 1800 in FIG. 18 can be configured to implement the processes described with reference to the access network device 240 in FIG. 3 to FIG. 15. For brevity, details are not described herein again.

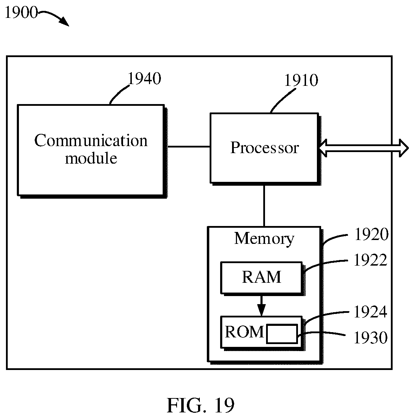

FIG. 19 is a simplified block diagram of an example apparatus 1900 according to an embodiment of this disclosure. The apparatus 1900 may be configured to implement the terminal device 210 and the access network device 240 that are shown in FIG. 2. As shown in the figure, the apparatus 1900 includes one or more processors 1910, one or more memories 1920 coupled to the processor 1910, and a communication module 1940 coupled to the processor 1910.

The communication module 1940 may be configured to perform bidirectional communication. The communication module 1940 may have at least one communication interface for communication. The communication interface may include any interface necessary for communicating with another device.

The processor 1910 may be any type applicable to a local technology network, and may include but is not limited to at least one of the following: a general-purpose computer, a dedicated computer, a microcontroller, a digital signal processor (Digital Signal Processor, DSP), or a controller-based multi-core controller architecture. The apparatus 1900 may have a plurality of processors, for example, an application-specific integrated circuit chip, which belongs to a clock synchronized with the main processor in terms of time.

The memory 1920 may include one or more nonvolatile memories and one or more volatile memories. An example of the nonvolatile memory includes but is not limited to at least one of the following: a read-only memory (Read-Only Memory, ROM) 1924, an erasable programmable read-only memory (Erasable Programmable Read-Only Memory, EPROM), a flash memory, a hard disk, a compact disc (Compact Disc, CD), a digital versatile disc (Digital Versatile Disc, DVD), or other magnetic storage and/or optical storage. An example of the volatile memory includes but is not limited to at least one of the following: a random access memory (Random Access Memory, RAM) 1922, or another volatile memory that does not last for power-off duration.

A computer program 1930 includes computer-executable instructions executed by the associated processor 1910. The program 1930 may be stored in the ROM 1924. The processor 1910 may perform any proper action and processing by loading the program 1930 into the RAM 1922.

Embodiments of this disclosure may be implemented by using the program 1930, so that the apparatus 1900 can perform any process discussed with reference to FIG. 3 to FIG. 15. Embodiments of this disclosure may alternatively be implemented by using hardware or a combination of software and hardware.

In some embodiments, the program 1930 may be tangibly included in a computer-readable medium, and the computer-readable medium may be included in the apparatus 1900 (for example, in the memory 1920) or another storage device that can be accessed by the apparatus 1900. The program 1930 may be loaded from the computer-readable medium to the RAM 1922 for execution. The computer-readable medium may include any type of tangible nonvolatile memory, for example, an ROM, an EPROM, a flash memory, a hard disk, a CD, or a DVD.

In some embodiments, the communication module 1940 in the apparatus 1900 may be implemented as a transmitter and a receiver (or a transceiver), and may be configured to send/receive system information, for example, first system information, second system information, or third system information. In addition, the apparatus 1900 may further include one or more of a scheduler, a controller, and a radio frequency/an antenna. Details are not described in this disclosure.

For example, the apparatus 1900 in FIG. 19 may be implemented as a terminal device 210 or an access network device 240, or may be implemented as a chip or a chip system in the terminal device 210, or may be implemented as a chip or a chip system in the access network device 240. This is not limited in this embodiment of this disclosure.

An embodiment of this disclosure further provides a chip. The chip may include an input interface, an output interface, and a processing circuit. In this embodiment of this disclosure, the input interface and the output interface may complete interaction of the foregoing signaling or data, and the processing circuit may complete generation and processing of the signaling or data information.

An embodiment of this disclosure further provides a chip system, including a processor, configured to support a terminal device 210 or an access network device 240 in implementing the function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. The chip system may include a chip, or may include a chip and another discrete component.

An embodiment of this disclosure further provides a processor, configured to be coupled to a memory. The memory stores instructions. When the processor runs the instructions, the processor is enabled to perform the method and the function that are related to the terminal device 210 or the access network device 240 in any one of the foregoing embodiments.

An embodiment of this disclosure further provides a computer program product including instructions. When the computer program product runs on a computer, the computer is enabled to perform the method and the function that are related to the terminal device 210 or the access network device 240 in any one of the foregoing embodiments.

An embodiment of this disclosure further provides a computer-readable storage medium. The computer-readable storage medium stores computer instructions. When a processor runs the instructions, the processor is enabled to perform the method and the function that are related to the terminal device 210 or the access network device 240 in any one of the foregoing embodiments.

An embodiment of this disclosure further provides a wireless communication system. The system includes a terminal device 210 or an access network device 240.

Usually, various embodiments of this disclosure may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of this disclosure are shown and described as block diagrams, flowcharts, or some other figures, it should be understood that the blocks, apparatuses, systems, techniques, or methods described in this specification may be implemented as, for example, non-limiting examples, hardware, software, firmware, dedicated circuits or logic, general-purpose hardware, controllers, other computing devices, or a combination thereof.

This disclosure further provides at least one computer program product tangibly stored on a non-transitory computer-readable storage medium. The computer program product includes computer-executable instructions, such as instructions included in a program module, which are executed in a device on a target real or virtual processor to perform the processes/method as described above with reference to FIG. 3 to FIG. 15. Usually, a program module includes a routine, a program, a library, an object, a class, a component, a data structure, or the like that executes a specific task or implements a specific abstract data type. In various embodiments, the functions of the program modules may be combined or split between the program modules as required. Machine-executable instructions for the program module may be executed locally or in a distributed device. In the distributed device, the program module may be locally located and located in a remote storage medium.

Computer program code for implementing the method disclosed in this disclosure may be written in one or more programming languages. The computer program code may be provided for a processor of a general-purpose computer, a dedicated computer, or another programmable data processing apparatus, so that when the program code is executed by the computer or the another programmable data processing apparatus, the function/operation specified in the flowchart and/or block diagram is implemented. The program code may be executed completely on a computer, partially on a computer, as a standalone software package, partially on a computer and partially on a remote computer, or completely on a remote computer or server.

In the context of this disclosure, the computer program code or related data may be carried in any proper carrier, so that the device, the apparatus, or the processor can perform various processing and operations described above. Examples of the carrier include a signal, a computer-readable medium, and the like. For example, the signal may be electricity, light, radio, sound, or another form of propagated signal like a carrier wave or an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to electronic, magnetic, optical, electromagnetic, infrared, or semiconductor systems, apparatuses or devices, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in this disclosure are described in a particular order in the accompanying drawings, this does not require or imply that these operations need to be performed in the particular order, or that all the operations shown need to be performed to achieve the desired results. Instead, the steps depicted in the flowchart may change an order of execution. Additionally or alternatively, some steps may be omitted, a plurality of steps are combined into one step for execution, and/or one step is decomposed into a plurality of steps for execution. It should further be noted that, the features and functions of two or more apparatuses according to this disclosure may be specific in one apparatus. Instead, the features and functions of one apparatus described above may be further specific in a plurality of apparatuses.

The foregoing has described various implementations of this disclosure. The foregoing descriptions are examples, are not exhaustive, and are not limited to the disclosed implementations. Many modifications and changes are clear to a person of ordinary skill in the art without departing from the scope and spirit of the described implementations. Selection of the terms used in this specification is intended to well explain principles of various implementations, actual applications, or improvements to technologies in the market, or to enable another person of ordinary skill in the art to understand various implementations disclosed in this specification.

## Claims

1. A cell reselection method, comprising:
determining, by a terminal device, a target network slice;
determining, by the terminal device, at least one candidate cell based on the target network slice, wherein a frequency corresponding to the candidate cell supports the target network slice; and
performing, by the terminal device, cell reselection based on the at least one candidate cell.

2. The method according to claim 1, wherein the method further comprises:
receiving, by the terminal device, first system information from an access network device of a serving cell in which the terminal device is located, wherein the first system information comprises a network slice supported by a frequency corresponding to the serving cell and/or a first priority of the network slice supported by the frequency corresponding to the serving cell.

3. The method according to claim 1, wherein the method further comprises:
receiving, by the terminal device, second system information from an access network device of a serving cell in which the terminal device is located, wherein the second system information comprises a network slice supported by a frequency corresponding to a neighboring cell and/or a second priority of the network slice supported by the frequency corresponding to the neighboring cell, the second system information further comprises indication information corresponding to the network slice supported by the frequency corresponding to the neighboring cell, and the indication information indicates whether the serving cell supports the network slice supported by the frequency corresponding to the neighboring cell.

4. The method according to claim 2, wherein the first system information further comprises a second priority of a network slice supported by a frequency corresponding to a neighboring cell.

5. The method according to claim 3, wherein the second system information further comprises a first priority of a network slice supported by a frequency corresponding to the serving cell.

6. The method according to any one of claims 3 to 5, wherein the determining at least one candidate cell based on the target network slice comprises:
determining the at least one candidate cell in the neighboring cell based on the target network slice and the network slice supported by the frequency corresponding to the neighboring cell.

7. The method according to claim 1, wherein the performing, by the terminal device, cell reselection based on the at least one candidate cell comprises:
selecting, by the terminal device, a to-be-camped-on cell based on the at least one candidate cell;
determining, by the terminal device, whether the to-be-camped-on cell meets a reselection condition; and
reselecting the to-be-camped-on cell when the to-be-camped-on cell meets the reselection condition.

8. The method according to claim 7, wherein the selecting, by the terminal device, a to-be-camped-on cell based on the at least one candidate cell comprises: selecting, by the terminal device, the to-be-camped-on cell from a serving cell and a neighboring cell based on at least one of the following:
a first priority of the target network slice on a frequency corresponding to the serving cell, a second priority of the target network slice supported by the frequency corresponding to the candidate cell, or a second priority of the target network slice on a frequency corresponding to a non-candidate cell other than the at least one candidate cell in the neighboring cell.

9. The method according to claim 8, further comprising:
when the serving cell does not support the target network slice, setting, to a first preset value, the first priority of the target network slice on the frequency corresponding to the serving cell, wherein the first preset value is lower than the second priority of the target network slice supported by the frequency corresponding to the candidate cell.

10. The method according to claim 8 or 9, further comprising:
for the non-candidate cell other than the at least one candidate cell in the neighboring cell, setting, to a second preset value, the second priority of the target network slice on the frequency corresponding to the non-candidate cell, wherein the second preset value is lower than the second priority of the target network slice supported by the frequency corresponding to the candidate cell.

11. A communication apparatus, comprising:
a first determining unit, configured to determine a target network slice;
a second determining unit, configured to determine at least one candidate cell based on the target network slice, wherein a frequency corresponding to the candidate cell supports the target network slice; and
a cell reselection unit, configured to perform cell reselection based on the at least one candidate cell.

12. The apparatus according to claim 11, further comprising a receiving unit, configured to:
receive first system information from an access network device of a serving cell in which the communication apparatus is located, wherein the first system information comprises a network slice supported by a frequency corresponding to the serving cell and/or a first priority of the network slice supported by the frequency corresponding to the serving cell.

13. The apparatus according to claim 11, further comprising a receiving unit, configured to:
receive second system information from an access network device of a serving cell in which the communication apparatus is located, wherein the second system information comprises a network slice supported by a frequency corresponding to a neighboring cell and/or a second priority of the network slice supported by the frequency corresponding to the neighboring cell, the second system information further comprises indication information corresponding to the network slice supported by the frequency corresponding to the neighboring cell, and the indication information indicates whether the serving cell supports the network slice supported by the frequency corresponding to the neighboring cell.

14. The apparatus according to claim 12, wherein the first system information further comprises a second priority of a network slice supported by a frequency corresponding to a neighboring cell.

15. The apparatus according to claim 13, wherein the second system information further comprises a first priority of a network slice supported by a frequency corresponding to the serving cell.

16. The apparatus according to any one of claims 13 to 15, wherein the second determining unit is configured to:
determine the at least one candidate cell in the neighboring cell based on the target network slice and the network slice supported by the frequency corresponding to the neighboring cell.

17. The apparatus according to claim 11, wherein the cell reselection unit comprises:
a selection subunit, configured to select a to-be-camped-on cell based on the at least one candidate cell;
a determining subunit, configured to determine whether the to-be-camped-on cell meets a reselection condition; and
a reselection subunit, configured to reselect the to-be-camped-on cell when the to-be-camped-on cell meets the reselection condition.

18. The apparatus according to claim 17, wherein the selection subunit is configured to select the to-be-camped-on cell from a serving cell and a neighboring cell based on at least one of the following:
a first priority of the target network slice on a frequency corresponding to the serving cell, a second priority of the target network slice supported by the frequency corresponding to the candidate cell, or a second priority of the target network slice on a frequency corresponding to a non-candidate cell other than the at least one candidate cell in the neighboring cell.

19. The apparatus according to claim 18, further comprising a setting unit, configured to:
when the serving cell does not support the target network slice, set, to a first preset value, the first priority of the target network slice on the frequency corresponding to the serving cell, wherein the first preset value is lower than the second priority of the target network slice supported by the frequency corresponding to the candidate cell.

20. The apparatus according to claim 18 or 19, further comprising a setting unit, configured to:
for the non-candidate cell other than the at least one candidate cell in the neighboring cell, set, to a second preset value, the second priority of the target network slice on the frequency corresponding to the non-candidate cell, wherein the second preset value is lower than the second priority of the target network slice supported by the frequency corresponding to the candidate cell.

21. A computer-readable storage medium, wherein the computer-readable storage medium stores a computer program, and when the computer program is executed by a processor, the method according to any one of claims 1 to 10 is implemented.
